# EUROPEAN PATENT APPLICATION

(11) **EP 4 776 335 A1**
(43) Date of publication of application: **15.07.2026**
(21) Application number: 24927673.4
(22) Date of filing: 25.11.2024
(51) Int. Cl.: H01M 4/04, H01M 4/139, H01M 4/62, H01M 10/0525, H01M 10/42

(54) **SAFETY COATING AND USE THEREOF, ELECTRODE SHEET AND LITHIUM-ION BATTERY**

(30) Priority: 17.10.2024 CN 202411453782
(71) Applicant: ZHEJIANG LIWINON ENERGY TECHNOLOGY CO., LTD., Jinhua, Zhejiang 321102 (CN)
(72) Inventor: HUANG, Xu, Jinhua, Zhejiang 321102 (CN); WEI, Xiaoliang, Jinhua, Zhejiang 321102 (CN); TAN, Yuangao, Jinhua, Zhejiang 321102 (CN); WU, Shengben, Jinhua, Zhejiang 321102 (CN); XIANG, Haibiao, Jinhua, Zhejiang 321102 (CN)
(74) Representative: Appleyard Lees IP LLP
(86) International application number: PCT/CN2024/134235
(87) International publication number: WO 2026/081298

(57) **Abstract**

A safety coating and use thereof, an electrode sheet, and a lithium-ion battery are disclosed, which relates to the technical field of secondary battery materials. By limiting the particle size of the inorganic filler, a well-graded distribution of large and small particles is achieved, resulting in a relatively dense structure for the safety coating, thereby reducing the probability of contact between the positive electrode and the negative electrode, and enhancing the safety performance of the battery cell. Meanwhile, by optimizing the content of binder in the safety coating, the electrolytic solution absorption by the safety coating is promoted, which can improve the rate performance, low-temperature discharge performance, and cycling performance of the battery cell. Ultimately, by limiting the particle size of the inorganic filler and selecting the binder, the safety performance of the battery cell can be improved while enhancing its rate performance, low-temperature discharge performance, and cycling performance.

## Description

### TECHNICAL FIELD

The present disclosure relates to the technical field of secondary battery materials, and in particular relates to a safety coating and use thereof, an electrode sheet, and a lithium-ion battery.

### BACKGROUND

Lithium-ion batteries are widely used in products such as 3C electronics (computer, communication and consumer), electric vehicles, and electric tools due to their advantages of high energy density, no memory effect, long cycle life, environmental friendliness, and adaptability to various environments.

In practical applications, the requirements for the safety performance and cycling performance of the lithium-ion batteries are also becoming increasingly stringent. To improve the safety performance of the batteries, introducing safety coatings into the electrode sheets is one of the commonly used measures in the industry. These safety coatings typically comprise a certain proportion of inorganic fillers, conductive agents, and binders. However, conventional safety coating structures are relatively porous, unable to effectively improve the safety performance of the battery cells, and may increase the internal resistance of the cells, resulting in increased polarization, deteriorated low-temperature performance, deteriorated rate performance, and deteriorated cycling performance of the battery cells. However, the lithium-ion battery is subject to kinetic limitations, making it prone to lithium plating, which results in decreased cycling performance and rate performance of the battery cell. When lithium plating occurs, increased side reactions lead to electrolytic solution consumption, meanwhile, the formation of new solid electrolyte interphase (SEI) during cycling further consumes the electrolytic solution, accelerating deterioration of cycling performance. In addition, during mechanical abuse tests of the battery cell, such as nail penetration, the positive electrode and negative electrode of the battery may also experience short circuit and thermal runaway, ultimately causing the fail of tests.

Therefore, it is of great significance to solve the current problems of safety coatings being unable to effectively improve the rate performance and cycling performance of the battery cell, and to provide a safety coating that can improve the safety performance of the battery cell while enhancing its rate performance, low-temperature discharge performance, and cycling performance.

### SUMMARY

The present disclosure aims to solve at least one of the technical problems existing in the prior art. To this end, the present disclosure provides a safety coating and use thereof, an electrode sheet, and a lithium-ion battery, which aim to solve the current problems of safety coatings being unable to effectively improve the low-temperature performance, rate performance, and cycling performance of the battery cell.

A first aspect of the present disclosure provides a safety coating, wherein raw materials of the safety coating comprise an inorganic filler and a first binder; a coefficient of nonuniformity Cᵤ of the inorganic filler satisfies 2 ≤ Cᵤ ≤ 18, a curvature coefficient C_{c} of the inorganic filler satisfies 0.5 ≤ Cc ≤ 3.1; a mass fraction w of the first binder in the safety coating satisfies w = k×(Cᵤ)^{0.5}/Dᵥ₅₀, where 0.2 ≤ k < 2, and k is a constant;
wherein a formula for calculating the coefficient of nonuniformity Cᵤ is as follows: Cᵤ = Dᵥ₉₀/Dᵥ₁₀, and a formula for calculating the curvature coefficient C_{c} is as follows: C_{c} = Dᵥ₅₀×Dᵥ₅₀/(Dᵥ₁₀×Dᵥ₉₀); and
Dᵥ₁₀, Dᵥ₅₀, and Dᵥ₉₀ refer to particle sizes corresponding to volume distribution cumulative values of the inorganic filler reaching 10%, 50%, and 90%, respectively.

The safety coating according to an embodiment of the present disclosure has at least the following beneficial effects: The safety coating provided by the present disclosure comprises an inorganic filler and a binder. By limiting the particle size of the inorganic filler and selecting the binder, the safety performance of the battery cell can be improved while enhancing its rate performance, low-temperature discharge performance, and cycling performance. Wherein, the particle sizes Dᵥ₁₀, Dᵥ₅₀, and Dᵥ₉₀ of the inorganic filler should satisfy: 2≤Cᵤ=Dᵥ₉₀/Dᵥ₁₀≤18, 0.5≤C_{c}=Dᵥ₅₀×Dᵥ₅₀/(D_{y10}×Dᵥ₉₀) <3.1, where Cᵤ and C_{c} represent the coefficient of nonuniformity and curvature coefficient of the inorganic filler, respectively; Dᵥ₁₀, Dᵥ₅₀, and Dᵥ₉₀ represent particle sizes corresponding to volume distribution cumulative values of the inorganic filler reaching 10%, 50%, and 90%, respectively. When the particle size of the inorganic filler satisfies the above relationship, the gradation curve exhibits good continuity, and the fine particles and coarse particles are well graded, thereby enabling the safety coating to have a relatively dense structure, reducing the probability of short circuits between the positive electrode and the negative electrode, and enhancing the safety performance of the battery cell. The mass fraction w of the first binder should satisfy w=k×(Cᵤ)^{0.5}/Dᵥ₅₀, where 0.2<k<2. When k falls within this range, the binder not only provides sufficient adhesion and minimized polarization of the battery cell, but also promotes the electrolytic solution absorption by the safety coating, thereby improving the rate performance, low-temperature discharge performance, and cycling performance of the battery cell. Ultimately, the safety coating provided by the present disclosure achieves a well-graded distribution of large and small particles by limiting the particle size of the inorganic filler, resulting in a relatively dense structure for the safety coating. This in turn reduces the probability of contact between the positive electrode and the negative electrode, thereby enhancing the safety performance of the battery cell. Meanwhile, by optimizing the binder content in the safety coating, the electrolytic solution absorption by the safety coating is promoted, which can improve the rate performance, low-temperature discharge performance, and cycling performance of the battery cell.

In the present disclosure, the coefficient of nonuniformity of the particle size of the inorganic filler, defined as Cᵤ=Dᵥ₉₀/Dᵥ₁₀, should satisfy: 2≤Cᵤ=Dᵥ₉₀/Dᵥ₁₀≤18. The coefficient of nonuniformity (Cᵤ) is an important parameter for describing the particle size distribution of the inorganic filler, reflecting the degree of nonuniformity in the particle size of the inorganic filler. When Cᵤ is greater than 18, it indicates a wide distribution range of the particle sizes of the inorganic filler particles, with the presence of some particles with exceptionally large sizes. During coating of the safety coating, instances of coating skips may occur, which may adversely affect the safety performance of the battery cell. When Cᵤ is less than 2, the distribution range of the particle sizes of the inorganic filler particles is narrow, with most particles having similar sizes. In this case, there are insufficient fine particles to fill the gaps between larger particles, resulting in poor particle grading. Consequently, the safety coating has lower density, which negatively impacts the safety performance and energy density of the battery cell. When Cᵤ falls within the aforementioned range, the safety coating can achieve a relatively dense structure while also minimizing the risk of coating skips during coating of the safety coating, resulting in superior overall performances.

In the present disclosure, the curvature coefficient of the inorganic filler, defined as C_{c}=Dᵥ₅₀×Dᵥ₅₀/(Dᵥ₁₀×Dᵥ₉₀), should satisfy: 0.5≤C_{c}=Dᵥ₅₀×Dᵥ₅₀/(D_{y10}×Dᵥ₉₀) ≤3.1. The curvature coefficient (C_{c}) is a parameter describing the shape of the particle size distribution curve. When C_{c} equals 1, the particle size distribution of the inorganic filler is in an ideal state, with a continuous particle size distribution without significant gaps or jumps in size. The shape of the particle size distribution curve is uniform, indicating a smooth transition from fine to coarse particles. When C_{c} deviates from 1, it indicates that the particle size distribution of the inorganic filler deviates from the ideal state. When C_{c} is greater than 1, it indicates that the particle size distribution curve is convex on a logarithmic plot of particle size, meaning that the particle size distribution of the fine particle fraction is more concentrated than that of the coarse particle fraction. Conversely, when C_{c} is less than 1, it indicates that the particle size distribution curve is concave, meaning that the particle size distribution of the coarse particle fraction is more concentrated than that of the fine particle fraction. However, the particle size distribution of the inorganic filler often deviates from the ideal state, with the inorganic filler predominantly consisting of either fine particles or coarse particles, resulting in a discontinuous overall shape of the gradation curve. This leads to a higher porosity and lower density of the safety coating. In the present disclosure, by limiting the C_{c} value within the aforementioned range, the better continuity of the gradation curve can be ensured, thereby facilitating an improvement in the density of the safety coating.

In the present disclosure, a content of the first binder, w, should satisfy w=k×(Cᵤ)^{0.5}/Dᵥ₅₀, where 0.2<k<2, and k is a constant related to the density of the inorganic filler. Generally, when the particle shape and pore structure are determined, a smaller Dᵥ₅₀ of the particles indicates a larger specific surface area of the particles, resulting a greater contact area with the binder. Accordingly, the binder content needs to be increased. Cᵤ reflects the particle distribution, and a smaller Cᵤ value means that all particle sizes tend to concentrate toward Dᵥ₅₀, resulting in fewer fine particles in the system and a smaller overall specific surface area, thereby allowing for a reduced binder content. The k value indicates the level of binder content in the safety coating. When k < 0.2, the adhesion between the safety coating and the current collector is poor, posing a risk of peeling off; when k > 2, it leads to increased polarization of the battery cell, thereby deteriorating the rate performance, low-temperature discharge performance, and cycling performance of the battery cell. When the k value is within the range of 0.2-2, not only is the adhesion sufficient and the polarization of the battery cell minimized, but the electrolytic solution absorption by the safety coating is also promoted, the rate performance, low-temperature discharge performance, and cycling performance of the battery cell are improved.

In some embodiments of the present disclosure, a median particle size Dᵥ₅₀ of the inorganic filler ranges from 0.2 µm to 4 µm, and the specific surface area is 5 m²/g to 50 m²/g. When the Dᵥ₅₀ of the inorganic filler is less than 0.2 µm and the specific surface area is greater than 50 m²/g, the inorganic filler tends to agglomerate and is difficult to disperse; when the Dᵥ₅₀ of the inorganic filler is greater than 4 µm and the specific surface area is less than 5 m²/g, due to the larger particle size, it will be challenging to obtain a thin safety coating, thereby affecting energy density of the battery cell. Additionally, during the coating of the safety coating, primer coating skips may occur, which affects the safety of the battery cell. When the median particle size and specific surface area of the inorganic filler fall within the aforementioned ranges, a good balance can be achieved between the processability of the safety coating and the energy density of the battery cell.

In some embodiments of the present disclosure, the inorganic filler comprises one or more of aluminum oxide, boehmite, aluminum hydroxide, magnesium hydroxide, silicon dioxide, titanium dioxide, lithium iron phosphate, lithium manganese iron phosphate, lithium aluminum titanium phosphate, lithium lanthanum titanate, or lithium lanthanum zirconium oxide; preferably, the inorganic filler is boehmite. The inorganic filler used in the present disclosure may be an inert inorganic filler, such as aluminum oxide, boehmite, aluminum hydroxide, magnesium hydroxide, silicon dioxide, and titanium dioxide; or an active material exhibiting certain capacity and good thermal stability, such as lithium iron phosphate and lithium manganese iron phosphate; or a solid electrolyte such as lithium aluminum titanium phosphate (LATP), lithium lanthanum titanate (LLTO), and lithium lanthanum zirconium oxide (LLZO). Preferably, the inorganic filler is boehmite. Compared to other inorganic fillers, boehmite is not only cost-effective but also has a lower Rockwell hardness, which results in less wear on the gravure rolls and thereby reducing manufacturing costs.

In some embodiments of the present disclosure, a mass fraction of the inorganic filler in the safety coating is 73.8% to 98.5%.

In some embodiments of the present disclosure, the first binder comprises one or more of a polyvinylidene fluoride (PVDF) binder, a sodium carboxymethyl cellulose (CMC) binder, or a polyacrylate (PAA)-based binder.

In some embodiments of the present disclosure, a mass fraction of the first binder in the safety coating is 1 wt% to 21.2 wt%, preferably 5 wt% to 15 wt%. When the binder content in the safety coating is less than 1%, the adhesion of the safety coating is insufficient, making it prone to peeling off during subsequent use; when the binder content is greater than 21.2%, it may cause difficulties in processing during gravure printing of the safety coating and also deteriorate the internal resistance of the battery cell. Additionally, the binder content within the range of 1% to 21.2% helps to adjust a pH value of slurry to below 8.5, thereby mitigating corrosion of the aluminum foil current collector caused by alkaline aqueous solution of the active material.

In some preferred embodiments of the present disclosure, the first binder is a polyacrylate-based binder, which can reduce corrosion of the aluminum foil by the active material, exhibits excellent adhesion performance, is cost-effective, and uses deionized water as a solvent, making it environmentally friendly.

In some embodiments of the present disclosure, a structural formula of the polyacrylate-based binder is as follows: 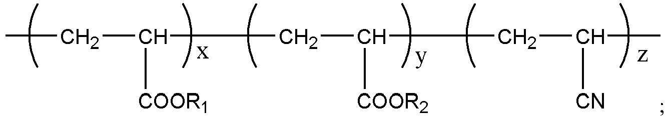
wherein, R₁ is independently H, Li, or Na at each occurrence;
R₂ is independently substituted or unsubstituted C₁-C₁₀ alkyl at each occurrence; and
5 ≤ (x+z)/y ≤ 20, 1.2 ≤ z/x ≤ 2, where x, y, and z are all non-zero.

The polyacrylate-based binder provided by the present disclosure achieves excellent adhesion performance by defining the contents of cyano groups (-CN), ester groups (-COOR₂), and carboxylate groups (-COOR₁) in the molecular chain of the binder. The binder is water-soluble, and uses water as a solvent, which eliminates the need for harmful organic solvents such as NMP, and makes it harmless to human and environmentally friendly. Moreover, the polyacrylate-based is abundant in supply, cost-effective, and widely applicable for industrial production. When the aforementioned binder is introduced into an electrode sheet as a raw material for water-based safety coating, based on its superior adhesion performance, the water-based safe coating can firmly adhere to the surface of current collector of the electrode sheet, which not only reduces surface contact resistance, but also minimizes the generation of current collector burrs during safety testing of the battery cell, thereby reducing contact short circuits between the current collector burrs and unstable active materials in the charged state, and enhancing safety of the battery cell. Furthermore, by defining the molecular weight of the binder and the content of the cyano groups, ester groups, and carboxylate groups in the molecular chain, the electrolytic solution absorption rate of the binder may be adjusted, which significantly improves the rate performance, high-temperature discharge performance and low-temperature discharge performance of the battery cell, and enhances the safety performance and cycling performance of the battery.

In the binder provided by the present disclosure, the molecular chain contains cyano groups (-CN, accounting for a fraction of n₁ among all side chain groups, and n₁=z/(x+y+z)), carboxylate groups (-COOR₁, wherein R₁ is independently H, Li, or Na at each occurrence, accounting for a fraction of n₂ among all side chain groups, and n₂=x/(x+y+z)), and ester groups (-COOR₂, wherein R₂ is independently substituted or unsubstituted C₁-C₁₀ alkyl at each occurrence, accounting for a fraction of n₃ among all side chain groups, and n₃=y/(x+y+z)), with n₁₊n₂+n₃=1.

Wherein, -CN is a highly polar group with good electrolytic solution affinity and electrochemical stability, providing strong adhesion. However, due to rigid nature of this group, it cannot accommodate the significant volume changes that occur during the intercalation/deintercalation of lithium ions in the active materials.

Wherein, -COOR₁ carries a negative charge, causing mutual repulsion between the groups, which facilitates the extension of binder molecules and promotes uniform dispersion of conductive agents, while also regulating swelling degree of the binder in the electrolytic solution, reducing erosion of the binder caused by electrolytic solution dissolution and better maintaining the adhesion capacity and adhesion performance of the binder.

Wherein, -COOR₂ has polarity and solubility parameters that are similar to those of carbonate-based solvents in the electrolytic solution, which facilitates moderate absorption of the electrolytic solution by the binder. The absorption of electrolytic solution in turn plasticizes the binder, imparting elasticity and flexibility to adapt to the periodic volume changes of the electrode active materials during lithium-ion intercalation/deintercalation in the process of charging and discharging. Meanwhile, the absorption of electrolytic solution enhances the ionic conductivity of the water-based safety coating, promoting improvement of the low-temperature discharge performance of the battery cell.

The binder is an indispensable component for maintaining the integrity of an electrode sheet and play a crucial role in improving battery performance, such as specific capacity and cycling stability. Polyacrylic acid has been used as a binder for both positive electrode and negative electrode of lithium-ion batteries due to its high content of polar functional groups, water solubility, and good adhesion. However, the polar groups in polyacrylic acid form hydrogen bonds between molecular chains, resulting in high chain rigidity, which is detrimental to maintaining the integrity of electrode sheet during charging and discharging. Therefore, controlling the number of functional groups in polyacrylic acid, altering the types of functional groups, and modifying the molecular chain structure of polyacrylic acid are imperative for improving the electrical performance of lithium-ion batteries. In the present disclosure, the contents of cyano groups, ester groups, and carboxylate groups in the molecular chain of the binder are limited as follows: (1) 1.2 ≤ z/x ≤ 2 i.e., n₁ and n₂ satisfy 1.2≤n₁/n₂≤2; when n₁/n₂<1.2, it is easy to cause insufficient adhesion of the binder; when n₁/n₂>2, the molecular chain presents a coiled conformation, which hinders the dispersion of conductive agents, and the binder is more susceptible to swelling by the electrolytic solution; (2) 5≤(x+z)/y≤20, i.e., n₁, n₂, and n₃ satisfy 5≤(n₁+n₂)/n₃≤20; when (n₁+n₂)/n₃<5, the binder contains an excessive amount of -COOR₂, leading to the binder to absorb an excessive amount of electrolytic solution, causing rapid decrease in adhesion, reduced elasticity, and deterioration of battery cell performance; and when (n₁+n₂)/n₃>20, the content of -COOR₂ in the binder is too low, resulting in insufficient elasticity of the binder, low ionic conductivity of the water-based safety coating, and significant reduction in the low-temperature discharge performance and rate discharge performance of the battery cell. Ultimately, by adjusting the contents of cyano groups, ester groups, and carboxylate groups in the molecular chain of the binder, the present disclosure achieves optimal adhesion of the binder, and adjusted electrolytic solution absorption by the binder, thereby enhancing the rate performance, high-temperature discharge performance and low-temperature discharge performance of the battery cell.

In some embodiments of the present disclosure, R₂ is independently C₁-C₁₀ linear alkyl, C₁-C₁₀ branched alkyl, or C₁-C₁₀ cycloalkyl at each occurrence; preferably C₁-C₁₀ linear alkyl; more preferably C₁-C₄ alkyl.

In some embodiments of the present disclosure, an electrolytic solution absorption rate c of the polyacrylate-based binder at 80°C is 10% to 50%, e.g., it may be 10% to 20%, 20% to 30%, 30% to 40%, or 40% to 50%.

In the present disclosure, the adjustment of the electrolytic solution absorption rate of the binder is achieved by defining the contents of cyano groups, ester groups, and carboxylate groups in the molecular chain of the binder. The electrolytic solution absorption rate c of the binder at 80 °C satisfies 10%≤c≤50%; when c<10%, the binder absorbs insufficient electrolytic solution, resulting in poor elasticity and an inability to buffer the periodic volume changes during lithium-ion intercalation/deintercalation in the active materials. Additionally, the ionic conductivity of the water-based safety coating is low, leading to deterioration in the low-temperature discharge performance and rate discharge performance of the battery cell; when c>50%, the binder absorbs excessive electrolytic solution, causing swelling of the water-based safety coating, reduced adhesion, increased internal resistance, and similarly leading to deterioration of battery cell performances.

In some embodiments of the present disclosure, a weight-average molecular weight M_{w} of the polyacrylate-based binder ranges from 200,000 to 500,000, e.g., it may be 200,000, 250,000, 300,000, 350,000, 400,000, 450,000, or 500,000.

In some embodiments of the present disclosure, a number-average molecular weight Mₙ of the polyacrylate-based binder ranges from 100,000 to 400,000, e.g., it may be 100,000, 150,000, 200,000, 250,000, 300,000, 350,000, or 400,000.

In some embodiments of the present disclosure, a ratio of the weight-average molecular weight M_{w} to the number-average molecular weight Mₙ of the polyacrylate-based binder satisfies M_{w}/Mₙ≤3; preferably, the M_{w}/Mₙ ranges from 1.5 to 1.9.

If the molecular weight of the binder is too low, not only will the adhesion be insufficient, but the required amount of the binder will also increase; if the molecular weight is too high, it will result in excessive viscosity and difficulties in processing. When M_{w}/Mₙ>3, the molecular weight distribution of the binder will be too dispersed, which deteriorates the performances of the water-based safety coating.

In some embodiments of the present disclosure, a mass fraction of the polyacrylate-based binder in the safety coating is 1 wt% to 21.2 wt%, preferably 5 wt% to 15 wt%. When the content of binder in the safety coating is less than 1%, the adhesion of the safety coating is insufficient, making it prone to peeling off during subsequent use; when the content of binder is greater than 21.2%, it may cause difficulties in processing during gravure printing of the safety coating and also deteriorate the internal resistance of the battery cell. Additionally, the content of binder within the range of 1% to 21.2% helps to adjust a pH of slurry to below 8.5, thereby mitigating corrosion of the aluminum foil current collector caused by alkaline aqueous solution of the active material.

The aforementioned polyacrylate-based binder can be prepared by any one of the conventional methods in the art, such as emulsion polymerization, solution polymerization, bulk polymerization, and suspension polymerization, etc.

In a specific embodiment, the present disclosure also provides a method for preparing the aforementioned polyacrylate-based binder, comprising the steps of:
S1: adding a dispersing medium to a reaction vessel and removing oxygen;
S2: adding a certain amount of acrylonitrile, a monomer A containing -COOR₁, and a monomer B providing -COOR₂ to the reaction vessel according to a ratio of x, y, and z;
S3: adding an initiator and heating to initiate a reaction; and
S4: after the reaction is complete, subjecting a reaction product to filtering, drying, crushing, and sieving to obtain the polyacrylate-based binder.

In some embodiments of the present disclosure, the monomer A comprises at least one of acrylic acid, lithium acrylate, or sodium acrylate, but is not limited thereto. The purpose of adding the monomer A is to provide -COOR₁, where R₁ is H, Li, or Na. Those skilled in the art may independently select suitable monomer A as needed, all of which shall be considered as reasonable variations within the scope of the present disclosure.

In some embodiments of the present disclosure, the monomer B comprises at least one of methyl acrylate, ethyl acrylate, or butyl acrylate, but is not limited thereto, and may also be at least one of C₁-C₁₀ acrylates. The purpose of adding the monomer B is to provide -COOR₂, where R₂ is substituted or unsubstituted C₁-C₁₀ alkyl. Those skilled in the art may independently select suitable monomer B as needed, all of which shall be considered as reasonable variations within the scope of the present disclosure.

In some embodiments of the present disclosure, in step S1, distilled water is added to the reaction vessel, stirring is initiated, and high-purity nitrogen is introduced for removing oxygen.

In some embodiments of the present disclosure, in step S2, after adding the acrylonitrile, the monomer A providing -COOR₁, and the monomer B providing -COOR₂, a resulting mixture is heated to 65 °C under an inert atmosphere and maintained at that temperature.

In some embodiments of the present disclosure, the initiator comprises 20% of ammonium persulfate, but is not limited thereto.

In some embodiments of the present disclosure, the raw materials of the safety coating further comprise a first conductive agent. The safety coating satisfies at least one of the following:
A1) a mass fraction of the first conductive agent in the safety coating is 0.5% to 5%;
A2) a mass ratio of the first conductive agent, the first binder, and the inorganic filler is 0.5-5: 1-21.2: 73.8-98.5;
A3) the raw materials of the safety coating further comprise a thermally stable active material;
A4) when A3) is included, a mass ratio of the first conductive agent, the first binder, the inorganic filler, and the thermally stable active material is 0.5-5: 1-21.2: 1-97.5: 1-97.5;
A5) when A3) is included, the thermally stable active material comprises one or both of lithium iron phosphate and lithium manganese iron phosphate.

In some embodiments of the present disclosure, a mass fraction of the first conductive agent in the safety coating is 0.5% to 5%, preferably 1% to 3.5%. An excessively low content of the conductive agent will result in high film resistance of the water-based safety coating, leading to poor cycling performance of the battery cell; an excessively high content will cause low film resistance of the water-based safety coating, compromising the safety of the battery cell. When the content of the conductive agent is between 0.5 wt% and 5 wt%, both safety and cycling performance can be balanced.

In some embodiments of the present disclosure, the first conductive agent comprises at least one of acetylene black, graphene, graphdiyne, carbon nanotubes, carbon fibers, or conductive carbon black. In the present disclosure, there are no specific requirements on the first conductive agent; and conventional conductive agents in the art may be used, for example, it may be conductive carbon black or carbon nanotubes, more specifically Timcal SUPER P Li conductive carbon black.

In some embodiments of the present disclosure, the mass ratio of the first conductive agent, the first binder, and the inorganic filler is 0.5-5: 1-21.2: 73.8-98.5. For example, in parts by weight, the first conductive agent may be 0.5-5 parts, preferably 1.5-3 parts; the first binder may be 1-21.2 parts, preferably 5-15 parts; and the inorganic filler may be 73.8-98.5 parts.

In some embodiments of the present disclosure, the raw materials of the safety coating further comprise a thermally stable active material.

In some embodiments of the present disclosure, the mass ratio of the first conductive agent, the first binder, the inorganic filler, and the thermally stable active material is 0.5-5: 1-21.2: 1-97.5: 1-97.5.

In some embodiments of the present disclosure, the raw materials of the safety coating comprise the first binder, the first conductive agent, the inorganic filler, and the thermally stable active material, wherein the mass ratio satisfies: the first conductive agent: the first binder: the inorganic filler: the thermally stable active material = 0.5-5: 1-21.2: 1-97.5: 1-97.5. For example, in parts by weight, the first conductive agent may be 0.5-5 parts, the first binder may be 1-21.2 parts, the inorganic filler may be 1-97.5 parts, and the thermally stable active material may be 1-97.5 parts.

In some embodiments of the present disclosure, the thermally stable active material comprises one or both of lithium iron phosphate and lithium manganese iron phosphate.

A second aspect of the present disclosure provides an electrode sheet comprising: a current collector, an active material layer, and the aforementioned safety coating.

The electrode sheet according to an embodiment of the present disclosure has at least the following beneficial effects. The present disclosure provides an electrode sheet comprising a safety coating. The safety coating comprises a binder, and the aforementioned inorganic filler and the conductive agent. By limiting the particle size of the inorganic filler and selecting the content of binder, the safety performance of the battery cell can be improved while enhancing its rate performance, low-temperature discharge performance, and cycling performance. Introducing the aforementioned safety coating into the electrode sheet not only improves the safety performance of the battery but also significantly enhances its rate performance, low-temperature discharge performance, and cycling performance.

In some embodiments of the present disclosure, the safety coating is coated on at least one side surface of the current collector, and the active material layer is coated on one side surface of the safety coating facing away from the current collector and/or on one side surface of the current collector facing away from the water-based safety coating.

Specifically, the electrode sheet is a positive electrode sheet, wherein the safety coating is coated on at least one side surface of the current collector, and the active material layer is coated on one side surface of the safety coating facing away from the current collector and/or on one side surface of the current collector facing away from the water-based safety coating.

More specifically, the electrode sheet is a positive electrode sheet, wherein the safety coating is coated on both side surfaces of the current collector, and the active material layer is coated on a surface of the safety coating facing away from the current collector.

In other embodiments of the present disclosure, the active material layer is coated on at least one side surface of the current collector, and the safety coating is coated on one side surface of the active material layer facing away from the current collector and/or on one side surface of the current collector facing away from the active material layer.

Specifically, the electrode sheet is a negative electrode sheet, wherein the active material layer is coated on at least one side surface of the current collector, and the safety coating is coated on one side surface of the active material layer facing away from the current collector and/or on one side surface of the current collector facing away from the active material layer.

More specifically, the electrode sheet is a negative electrode sheet, wherein the active material layer is coated on both side surfaces of the current collector, and the safety coating is coated on the surface of the active material layer facing away from the current collector.

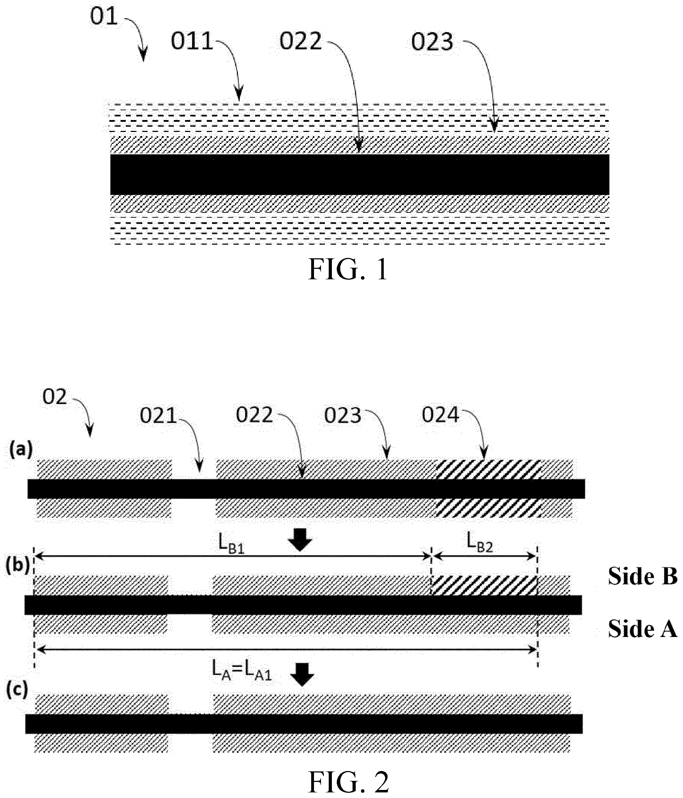

The electrode sheet provided by the present disclosure may serve as either a positive electrode sheet or a negative electrode sheet, preferably as a positive electrode sheet. When used as a positive electrode sheet, the safety coating is positioned closer to the current collector, with a structure of "current collector-safety coating-active material layer" as shown in FIG. 1, wherein the positive electrode sheet 01 comprises the following structure: a current collector 022; a safety coating 023 disposed on at least one surface of the current collector 022; an active material layer 011 disposed on one side surface of the safety coating 023 facing away from the current collector 022. When used as a negative electrode sheet, the active material layer is positioned closer to the current collector, with a structure of "current collector-active material layer-safety coating".

Internal short circuits in lithium-ion batteries can be generally categorized into several types: 1) a short circuit between positive electrode current collector and negative electrode current collector; 2) a short circuit between positive electrode active material and negative electrode active material; 3) a short circuit between negative electrode active material and positive electrode current collector; and 4) a short circuit between positive electrode active material and negative electrode current collector. Wherein the short circuit point between the negative electrode active material and the positive electrode current collector has low impedance, and the temperature for triggering exothermic reaction at the negative electrode is low. Therefore, the short circuit between the negative electrode active material and the aluminum foil is the most hazardous. In the present disclosure, by introducing the safety coating with high adhesion to the surface of the positive electrode current collector, the probability of contact between the positive electrode current collector and the negative electrode active material is reduced, thereby effectively enhancing the safety performance of the battery cell.

In some embodiments of the present disclosure, a thickness of the safety coating is 1-20 µm, e.g., it may be 1-7 µm, 7-14 µm, or 14-20 µm.

In some embodiments of the present disclosure, a coating areal density of the safety coating is 2-35 mg/1540.25 mm², e.g., it may be 2-8 mg/1540.25 mm², 8-15 mg/1540.25 mm², 14-21 mg/1540.25 mm², 20-28 mg/1540.25 mm², or 28-35 mg/1540.25 mm².

The coating areal density and thickness of the safety coating are positively correlated. If the thickness is too low, the safety performance of the battery cell will be compromised; if the thickness is too high, the energy density of the battery cell will be reduced.

In some embodiments of the present disclosure, a film resistance of the safety coating under a pressure of 0.4 t is 0.5-5 Ω. e.g., it may be 0.5-2 Ω, 2-3.5 Ω, or 3.5-5 Ω. The film resistance of the safety coating is a primary factor affecting the safety performance of the battery cell. If this value is too low, the safety performance of the battery cell will be deteriorated; whereas an excessively high value will compromise the cycling performance of the battery cell. A value between 0.5-5 Ω @ 0.4 T can balance both safety and cycling performance.

In some embodiments of the present disclosure, an adhesion between the safety coating and the current collector is not less than 100 N/m. If the adhesion falls below 100 N/m, the water-based safety coating poses a risk of peeling off during subsequent use.

In some embodiments of the present disclosure, raw materials of the active material layer comprise an active material, a second conductive agent, and a second binder.

In some embodiments of the present disclosure, the active material accounts for a mass percentage of 90% to 98% of the active material layer.

In some embodiments of the present disclosure, the second conductive agent accounts for 0.5% to 5% by mass of the active material layer, preferably 0.5% to 2%. If the content of the second conductive agent is too low, the cycling performance of the battery cell is poor; if the content is too high, it may improve cycling performance but compromise the safety performance of the battery cell.

In some embodiments of the present disclosure, the second conductive agent comprises at least one of acetylene black, graphene, graphdiyne, carbon nanotubes, carbon fibers, or conductive carbon black. There are no specific requirements for the second conductive agent in the present disclosure, and conventional conductive agents in the art may be used, for example, it may be conductive carbon black or carbon nanotubes, more specifically Timcal SUPER P Li conductive carbon black.

In some embodiments of the present disclosure, the second binder accounts for 0.5% to 5% by mass of the active material layer. If the content of the second binder is too low, the adhesion of the active material layer is insufficient, making it prone to peeling off during subsequent use; if the content of the second binder is too high, it may lead to difficulties in processing for the active material layer while deteriorating the internal resistance of the battery cell.

In some embodiments of the present disclosure, the second binder comprises at least one of polyvinylidene fluoride (PVDF), sodium carboxymethyl cellulose (CMC), styrene-butadiene rubber (SBR), or a PAA-based binder. There are no special requirements for the second binder in the present disclosure, and conventional binders in the art may be used.

In a specific embodiment, the active material layer may be a positive electrode active material layer. Raw materials of the positive electrode active material layer comprise a positive electrode active material, a second conductive agent, and a second binder.

The positive electrode active material is not limited and may be one or more of conventional lithium cobalt oxide, lithium iron phosphate, and a ternary material, with a content of 90 wt% to 98 wt% of a total weight of the active material layer. While ensuring certain conductivity and adhesion of the active material, a higher content of the active material is preferred, thereby enabling the battery cell to achieve higher energy density.

The second binder is not limited and may be a conventional negative electrode binder, comprising polyvinylidene fluoride (PVDF), sodium carboxymethyl cellulose (CMC), and a PAA-based binder, with the content of 0.5 wt% to 5 wt% of the total weight of the active material layer. If the content of the second binder is too low, the adhesion of the active material layer is insufficient, making it prone to peeling off during subsequent use; if the content of the second binder is too high, it may lead to difficulties in processing for the active material layer while deteriorating the internal resistance of the battery cell. Considering that it does not directly contact the current collector, the upper limit of the usage may be appropriately reduced to ensure that the positive electrode active material does not peel off during use of the battery cell. Moreover, a lower usage amount can also improve the cycling performance of the battery cell, increase the amount of the positive electrode active material, and enhance the energy density of the battery cell.

In a specific embodiment, the active material layer may be a negative electrode active material layer. Raw materials of the negative electrode active material layer comprise a negative electrode active material, a second conductive agent, and a second binder.

The negative electrode active material is not limited and may be one or more of conventional artificial graphite, natural graphite, modified graphite, and a silicon-based negative electrode material such as a silicon oxide, and a silicon-carbon composite, etc., with a content of 90 wt% to 98 wt% of the total weight of the active material layer.

In some embodiments of the present disclosure, the electrode sheet further comprises a current collector. The current collector is not limited and may be a conventional current collector. For example, when the electrode sheet is a positive electrode sheet, the current collector may be an aluminum foil or a composite aluminum foil; when the electrode sheet is a negative electrode sheet, the current collector may be a copper foil or a composite copper foil.

In some preferred embodiments of the present disclosure, a dyne value of the current collector is ≥30 dyn/cm, preferably ≥38 dyn/cm.

In some embodiments of the present disclosure, the safety coating is coated on both side surfaces of the current collector.

The safety coating satisfies at least one of the following:
B1) a double-sided thickness of the safety coating is 1µm -20 µm;
B2) a double-sided coating areal density of the safety coating is 2-35 mg/1540.25 mm²;
B3) a double-sided film resistance of the safety coating tested under a pressure of 0.4 t is 0.5-5 Ω;
B4) the numerical values of the double-sided thickness d and the double-sided film resistance R under the pressure of 0.4 t of the safety coating satisfy: 2≤R×d≤50; and
B5) along a direction perpendicular to an unwinding direction of the current collector, a distance W_{A1} between a left edge of the safety coating on Side A of the current collector and a left edge of the current collector ranges from 2 mm to 30 mm, and a distance W_{A2} between a right edge of the safety coating on Side A of the current collector and a right edge of the current collector ranges from 3 mm to 30 mm; a distance W_{B1} between a left edge of the safety coating on Side B of the current collector and a left edge of the current collector ranges from 2 mm to 30 mm, and a distance W_{B2} between a right edge of the safety coating on Side B of the current collector and a right edge of the current collector ranges from 3 mm to 30 mm; where W_{B1}-W_{A1}≥1 mm and W_{B2}-W_{A2}≥1 mm.

In some embodiments of the present disclosure, the double-sided thickness d of the safety coating (i.e., the sum of the thicknesses of the safety coating coated on both side surfaces of the current collector) is 1-20 µm, e.g., it may be 1-7 µm, 7-14 µm, or 14-20 µm.

In some embodiments of the present disclosure, the double-sided coating areal density of the safety coating (i.e., the sum of the coating areal density of the safety coating coated on both side surfaces of the current collector) is 2-35 mg/1540.25 mm², e.g., it may be 2-8 mg/1540.25 mm², 8-15 mg/1540.25 mm², 14-21 mg/1540.25 mm², 20-28 mg/1540.25 mm², or 28-35 mg/1540.25 mm².

The coating areal density and thickness of the safety coating are positively correlated. If the thickness is too low, the safety performance of the battery cell will be compromised; if the thickness is too high, the energy density of the battery cell will be reduced.

In some embodiments of the present disclosure, the double-sided film resistance R of the safety coating under the pressure of 0.4 t (i.e., the sum of the film resistance of the safety coating coated on both side surfaces of the current collector) is 0.5-5 Ω, e.g., it may be 0.5-2 Ω, 2-3.5 Ω, or 3.5-5 Ω. The film resistance of the safety coating is a primary factor affecting the safety performance of the battery cell. If this value is too low, the safety performance of the battery cell will be deteriorated; whereas an excessively high value will compromise the cycling performance of the battery cell. A value ranged in 0.5-5 Ω @ 0.4 T can balance both safety and cycling performance.

In some embodiments of the present disclosure, the numerical values of the double-sided thickness d (in µm) and the double-sided film resistance R (in Ω) under the pressure of 0.4 t of the safety coating satisfy the condition: 2≤R×d≤50. Generally, both parameters R and d are positively correlated with the safety performance of the battery cell, but are negatively correlated with the cycling performance of the battery cell. When the relationship of 2≤R×d≤50 is satisfied, a good balance between the safety performance and the electrochemical performance of the battery cell can be achieved.

In some embodiments of the present disclosure, the adhesion between the safety coating and the current collector is not less than 100 N/m. If the adhesion falls below 100 N/m, the safety coating poses a risk of peeling off during subsequent use.

In a specific embodiment, the present disclosure provides a positive electrode sheet, which comprises a positive electrode active material layer, a safety coating, and a positive electrode current collector. Raw materials of the safety coating comprise an inorganic filler and a first binder; a coefficient of nonuniformity Cᵤ of the inorganic filler satisfies 2 ≤ Cᵤ ≤ 18, a curvature coefficient C_{c} satisfies 0.5 ≤ C_{c} ≤ 3.1; a mass fraction w of the first binder in the safety coating satisfies w = k×(Cᵤ)^{0.5}/Dᵥ₅₀, wherein 0.2 ≤ k ≤ 2; a formula for calculating the coefficient of nonuniformity Cᵤ is as follows: Cᵤ = Dᵥ₉₀/Dᵥ₁₀, a formula for calculating the curvature coefficient C_{c} is as follows: C_{c} = Dᵥ₅₀×Dᵥ₅₀/(Dᵥ₁₀×Dᵥ₉₀); Dᵥ₁₀, Dᵥ₅₀, and Dᵥ₉₀ refer to particle sizes corresponding to volume distribution cumulative values of the inorganic filler reaching 10%, 50%, and 90%, respectively; and k is a constant related to the density of the inorganic filler.

The positive electrode sheet provided by the present disclosure incorporates a safety coating comprising an inorganic filler and a binder. By limiting the particle size of the inorganic filler, a well-graded distribution of large and small particles is achieved, resulting in a relatively dense structure for the safety coating, thereby reducing the probability of contact between the positive electrode and the negative electrode, and enhancing the safety performance of the battery cell. Meanwhile, by optimizing the content of binder in the safety coating, the electrolytic solution absorption by the safety coating is promoted, which can improve the rate performance, low-temperature discharge performance, and cycling performance of the battery cell.

A third aspect of the present disclosure provides a method for preparing the aforementioned electrode sheet, comprising the steps of:
S100: mixing a first binder with water, and performing dissolving and mixing to obtain a binder solution;
S200: uniformly mixing a first conductive agent and an inorganic filler with the binder solution, or uniformly mixing the first conductive agent, a thermally stable active material, and the inorganic filler with the binder solution, to obtain a safety coating slurry; and
S300: coating the water-based safety coating slurry to one side surface or both side surfaces of a current collector, or to one side surface of an active material layer facing away from the current collector, to obtain the electrode sheet.

The method for preparing the electrode sheet according to an embodiment of the present disclosure at least has at least the following beneficial effects: by introducing the safety coating into the electrode sheet, and by limiting the particle size of the inorganic filler and the content of binder in the safety coating, the safety performance of the battery cell can be improved while its rate performance, low-temperature discharge performance, and cycling performance are enhanced, without modifying the existing processes. This method is not only simple in process but also features non-stringent reaction conditions, compatibility with the existing preparation processes, and potential for large-scale application.

In some embodiments of the present disclosure, the method for preparing the electrode sheet comprises at least one of the following:
C1) a mass ratio of the first conductive agent, the first binder, and the inorganic filler is 0.5-5: 1-21.2: 73.8-98.5;
C2) a solid content of the binder solution is 10% to 30%;
C3) a viscosity of the binder solution is 1×10³ mPa·s to 3×10⁴ mPa·s;
C4) a solid content of the safety coating slurry is ≥10%;
C5) a viscosity of the safety coating slurry is ≥50 mPa·s;
C6) a dyne value of the current collector is ≥30 dyn/cm;
C7) the safety coating slurry is coated on one side surface or both side surfaces of the current collector, or to one side surface of the active material layer facing away from the current collector by gravure printing;
C8) when C7) is included, a temperature of an oven during the gravure printing is 90-110 °C, and a printing speed is 10-50 m/min; and
C9) a mass ratio of the first conductive agent, the first binder, the inorganic filler, and the thermally stable active material is 0.5-5: 1-21.2: 1-97.5: 1-97.5.

In some embodiments of the present disclosure, the mass ratio of the first conductive agent, the first binder, and the inorganic filler is 0.5-5: 1-21.2: 73.8-98.5. For example, in parts by weight, the first conductive agent may be 0.5-5 parts, the binder may be 1-21.2 parts, and the inorganic filler may be 73.8-98.5 parts.

In some embodiments of the present disclosure, the solid content of the binder solution is 10% to 30%, e.g., it may be 10% to 20%, 20% to 25%, or 25% to 30%.

In some embodiments of the present disclosure, the viscosity of the binder solution is 1×10³ mPa·s to 3×10⁴ mPa·s, preferably 1.5×10⁴ mPa·s to 2.5×10⁴ mPa·s, more preferably 1.6×10⁴ mPa·s to 2.2×10⁴ mPa·s, e.g., it may be 2×10⁴ mPa·s.

If the solid content and viscosity of the binder solution obtained by performing dissolving and mixing on the binder are too low, not only will the processing efficiency be reduced, but it may also lead to insufficient adhesion of the water-based safety coating; whereas, if the solid content and viscosity are too high, it may cause difficulties in processing the water-based safety coating.

In some embodiments of the present disclosure, raw materials of the safety coating further comprise the thermally stable active material, and the mass ratio satisfies: the first conductive agent: the first binder: the inorganic filler: the thermally stable active material = 0.5-5: 1-21.2: 1-97.5: 1-97.5. For example, in parts by weight, the first conductive agent may be 0.5-5 parts, the binder may be 1-21.2 parts, the inorganic filler may be 1-97.5 parts, and the thermally stable active material may be 1-97.5 parts.

In some embodiments of the present disclosure, the solid content of the safety coating slurry is ≥10%, preferably 10%-21%.

In some embodiments of the present disclosure, the viscosity of the safety coating slurry is ≥50 mPa·s.

The solid content of the safety coating slurry should not be less than 10%, and the viscosity should not be less than 50 mPa·s. If the solid content is too low, it will not only reduce production efficiency but also make it difficult to achieve the water-based safety coating with the specified thickness and areal density. If the viscosity is too low, it will adversely affect the gravure printing process.

In some embodiments of the present disclosure, the dyne value of the current collector is ≥30 dyn/cm, preferably >38 dyn/cm. When the dyne value of the current collector is below 30 dyn/cm, it may not only hinder wetting of the current collector by the safety coating slurry, leading to primer coating skips, but also reduce the adhesion between the safety coating and the current collector, which may cause the safety coating prone to peeling off during subsequent use, and adversely affect safety of the battery cell. The dyne value of not less than 38 dyn/cm may ensure good appearance and morphology of the primer coating, as well as strong adhesion between the safety coating and the current collector.

In some embodiments of the present disclosure, the safety coating slurry is coated on one side surface or both side surfaces of the current collector, or t on one side surface of the active material layer facing away from the current collector by gravure printing.

In some embodiments of the present disclosure, the temperature of the oven during the gravure printing is 90-110 °C, and the printing speed is not less than 10 m/min, preferably 10-50 m/min.

During the gravure printing, the temperature of the oven should be 90-110 °C, and the printing speed should be 10-50 m/min. If the temperature is below 90 °C, production efficiency will be reduced; if the temperature exceeds 110 °C, issues such as cracking and migration of the conductive agent to the surface may occur. If the printing speed is too low, production efficiency will also be reduced; if it is too high, it may lead to coating skips of the safety coating, thereby adversely affecting the safety performance of the battery cell.

In a specific embodiment of the present disclosure, a method for preparing the aforementioned electrode sheet is provided, comprising the following steps of:
(1) uniformly mixing a first binder, a first conductive agent, and an inorganic filler by using deionized water as a solvent to obtain a safety coating slurry; and
(2) transferring the safety coating slurry obtained from the step (1) to one side surface or both side surfaces of a current collector, or to one side surface of the active material layer facing away from the current collector by gravure printing, to obtain an electrode sheet with a safety coating area and a non-safety coating area arranged at intervals along an unwinding direction of the electrode sheet.

In some embodiments of the present disclosure, a total length of the electrode sheet comprising the safety coating is L, a length of the safety coating area is L₁, a length of the non-safety coating area is L₂, wherein L₁>L₂, L₁+L₂=L.

In some embodiments of the present disclosure, the safety coating may be coated on both sides (Side A and Side B) of the electrode sheet; wherein on Side A, a length of the safety coating area is L_{A1}, a length of the non-safety coating area is L_{A2}, where L_{A1}>L_{A2}, and L_{A1}+L_{A2}=L_{A}; on Side B, a length of the safety coating area is L_{B1}, a length of the non-safety coating area is L_{B2}, where L_{B1}>L_{B2}, and L_{B1}+L_{B2}=L_{B}.

In some preferred embodiments of the present disclosure, to improve production efficiency and reduce costs, both L_{A2} and L_{B2} may be set to 0, i.e., L_{A1}=L_{B1}=L_{A}=L_{B}.

In some embodiments of the present disclosure, during coating of the safety coating, N₁ slots for tab welding should be reserved in the safety coating area or non-safety coating area along the unwinding direction of the electrode sheet, where N₁ ≥ 0.

In some embodiments of the present disclosure, during coating of the safety coating, N₂ slots for tab welding should be reserved in the safety coating area or non-safety coating area along the direction perpendicular to the unwinding direction of the electrode sheet, where N₂ ≥ 0.

In some embodiments of the present disclosure, during coating of the safety coating, N₃ lines of the safety coating may be coated simultaneously along the unwinding direction of the electrode sheet, where N₃ ≥ 1.

In some embodiments of the present disclosure, if the safety coating is coated on both sides of the electrode sheet, the slots reserved for tab welding should be aligned between Side A and Side B, and a misalignment distance ΔW between the lateral direction and longitudinal direction is not exceeding 2 mm.

In some embodiments of the present disclosure, if the safety coating is coated on both sides of the electrode sheet, along the direction perpendicular to the unwinding direction of the current collector, a distance from the left edge of the water-based safety coating on Side A to the left edge of the current collector is W_{A1} (i.e., the left margin on Side A is W_{A1}), the right margin on Side A is W_{A2}, the left margin on Side B is W_{B1}, and the right margin on Side B is W_{B2}, these values satisfy 2 mm ≤ W_{A1}, W_{A2}, W₃₁, W_{B2} ≤ 30 mm, where W_{B1}-W_{A1}≥1 mm, and W_{B2}-W_{A2}≥1 mm.

In some embodiments of the present disclosure, the electrode sheet is a positive electrode sheet, and a method for preparing the positive electrode sheet comprises the following steps of:
(10) using deionized water as a solvent, adding a binder, performing dissolving and mixing to obtain a binder solution with a suitable viscosity and solid content, then adding a first conductive agent and an inorganic filler to the binder solution and mixing uniformly; alternatively, uniformly mixing a first conductive agent, a thermally stable active material, and an inorganic filler with the binder solution to obtain a water-based safety coating slurry; and
(20) transferring the safety coating slurry obtained from the step (10) to one side surface or both side surfaces of a current collector by gravure printing, to obtain an electrode sheet with a safety coating area and a non-safety coating area arranged at intervals along an unwinding direction of the electrode sheet.

Wherein, the non-safety coating area corresponds to a head and/or a tail of the positive electrode sheet of the battery cell, where one side is typically the active material, while the other side is either bare foil or a separately arranged ceramic layer. The ceramic layer typically contains merely the inorganic filler and the binder, which can reduce the generation of burrs on the positive electrode current collector in the non-safety coating area during testing of the battery cell, thereby lowering the probability of contact between the positive electrode current collector and the negative electrode active material and improving the safety performance of the battery cell. However, it requires an additional step to coat the ceramic layer after the safety coating is formed, which not only reduces production efficiency but also increases production costs.

In some embodiments of the present disclosure, a total length of the positive electrode sheet comprising the safety coating is L, a length of the safety coating area is L₁, a length of the non-water-based safety coating area is L₂, wherein L₁>L₂, and L₁+L₂=L.

In some embodiments of the present disclosure, the safety coating may be coated on both sides (Side A and Side B) of the positive electrode sheet; wherein on Side A, a length of the safety coating area is L_{A1}, a length of the non-safety coating area is L_{A2}, where L_{A1}>L_{A2}, and L_{A1}+L_{A2}=L_{A}; on Side B, a length of the safety coating area is L_{B1}, a length of the non-safety coating area is L_{B2}, where L_{B1}>L_{B2}, and L_{B1}+L_{B2}=L_{B}.

In some preferred embodiments of the present disclosure, to improve production efficiency and reduce costs, the function of the ceramic layer can be assumed by the safety coating, i.e., the non-safety coating area is also provided with the safety coating, with both L_{A2} and L_{B2} set to 0, i.e., L_{A1}=L_{B1}=L_{A}=L_{B}.

FIG. 2 shows a cross-sectional view of a current collector with a safety coating along the unwinding direction in a specific embodiment of the present disclosure. In FIG. 2, 02-positive electrode sheet; 021-reserved slot; 022-current collector; 023-safety coating area; 024-non-safety coating area. Wherein, the safety coating areas and non-safety coating areas on Side A and Side B of the positive electrode sheet can be oppositely arranged, as shown in Panel (a) of FIG. 2; or the non-safety coating area is arranged on one side, while the safety coating area is arranged on the other side, as shown in Panel (b) of FIG. 2. A total length of the current collector containing the safety coating is L, a length of the safety coating area on Side B is L_{B1}, a length of the non-safety coating area on Side B is L_{B2}, where L_{B1}>L_{B2}, and L_{B1}+L_{B2}=L_{B}=L_{A1}=L_{A}=L; alternatively, the safety coating can also be arranged on the non-safety coating zone, that is, both L_{A2} and L_{B2} are 0, and L_{A1}=L_{B1}=L_{A}=L_{B}, as shown in Panel (c) of FIG. 2.

In some embodiments of the present disclosure, during coating of the safety coating, Z slots for tab welding should be reserved in the safety coating area or non-safety coating area along the unwinding direction of the current collector, where Z ≥ 0.

In some embodiments of the present disclosure, during coating of the safety coating, X slots for tab welding should be reserved in the safety coating area or non-safety coating area along the direction perpendicular to the unwinding direction of the current collector, where X ≥ 0.

In some embodiments of the present disclosure, during coating of the safety coating, Y lines of the safety coating may be coated simultaneously along the unwinding direction of the current collector, where Y ≥ 1.

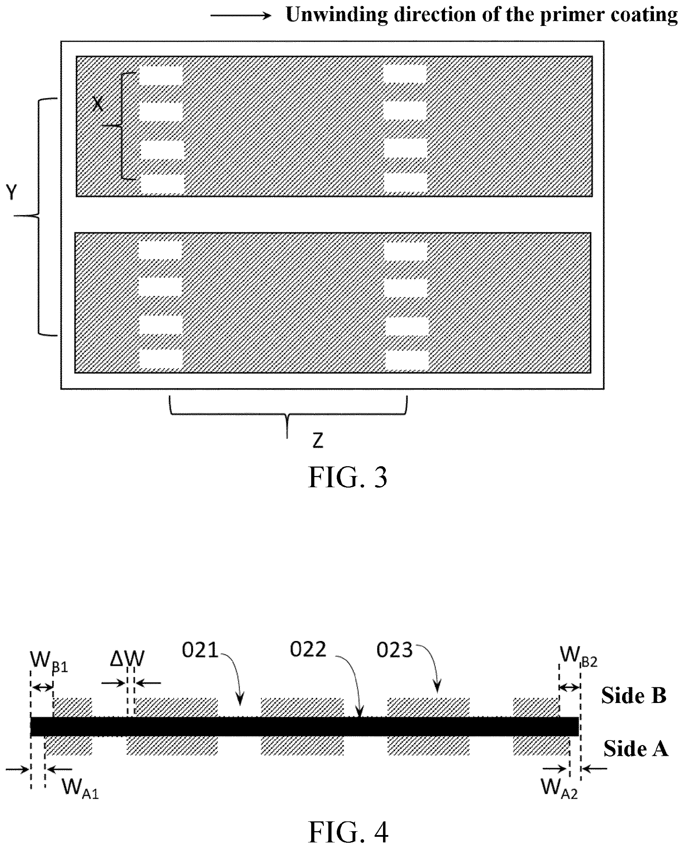

In the present disclosure, during coating of the safety coating, slots for tab welding may be reserved or not reserved as needed, as shown in FIG. 3.

In some embodiments of the present disclosure, if the safety coating is coated on both sides of the current collector, the slots reserved for tab welding should be aligned between Side A and Side B, and a misalignment distance ΔW between the lateral direction and longitudinal direction is not exceeding 2 mm.

In some embodiments of the present disclosure, the safety coating is coated on both side surfaces of the current collector; a distance W_{A1} between a left edge of the safety coating on Side A of the current collector and a left edge of the current collector ranges from 2 mm to 30 mm, and a distance W_{A2} between a right edge of the safety coating on Side A of the current collector and a right edge of the positive electrode current collector ranges from 2 mm to 30 mm; a distance W_{B1} between a left edge of the safety coating on Side B of the current collector and a left edge of the current collector ranges from 3 mm to 30 mm, and a distance W_{B2} between a right edge of the safety coating on Side B of the current collector and a right edge of the current collector ranges from 3 mm to 30 mm; and W₃₁ - W_{A1} ≥ 1 mm, W_{B2} - W_{A2} ≥ 1 mm. In other words, if the safety coating is coated on both sides of the current collector, along the direction perpendicular to the unwinding direction of the current collector, the distance from the left edge of the safety coating on Side A to the left edge of the current collector is W_{A1} (i.e., the left margin on Side A is W_{A1}), the right margin on Side A is W_{A2}, the left margin on Side B is W_{B1}, and the right margin on Side B is W_{B2}, which satisfy 2 mm ≤ W_{A1}, W_{A2} ≤ 30 mm, 3 mm ≤W_{B1}, W_{B2} ≤ 30 mm, where W_{B1}-W_{A1}≥1 mm, and W_{B2}-W_{A2}≥1 mm. FIG. 4 shows a cross-sectional view of a specific embodiment of the present disclosure in which the safety coating is perpendicular to the unwinding direction. In the figure: 021-reserved slot; 022-current collector; 023-safety coating area; such an arrangement ensures that the width of the safety coating on Side A is at least 2 mm wider than that on Side B, thereby reducing edge bulging during the winding of the base coating.

A fourth aspect of the present disclosure provides a lithium-ion battery, comprising a positive electrode sheet, a negative electrode sheet, and a separator arranged between the positive electrode sheet and the negative electrode sheet; wherein the positive electrode sheet and/or the negative electrode sheet is the aforementioned electrode sheet or the electrode sheet obtained by the aforementioned preparation method.

Since the lithium-ion battery comprises the electrode sheet described in all the technical solutions of the above embodiments, it at least possesses all the beneficial effects brought by the technical solutions of the above embodiments. By incorporating the safety coating into the electrode sheet and limiting the particle size of the inorganic filler in the safety coating, the lithium-ion battery achieves a well-graded distribution of large and small particles, resulting in a relatively dense structure for the safety coating, thereby reducing the probability of contact between the positive electrode and the negative electrode, and enhancing the safety performance of the battery cell. Meanwhile, by optimizing the content of binder in the safety coating, the electrolytic solution absorption by the safety coating is promoted, which improves the rate performance, low-temperature discharge performance, and cycling performance of the battery cell.

In some embodiments of the present disclosure, the positive electrode sheet is the aforementioned electrode sheet. The positive electrode sheet comprises the aforementioned positive electrode current collector comprising the safety coating and the positive electrode active material layer coated on at least one surface of the positive electrode current collector. The positive electrode current collector is a commonly used positive electrode current collector in the art, such as an aluminum foil, but is not limited thereto. The positive electrode active material layer comprises a positive electrode active material, which is a commonly used positive electrode active material in current lithium-ion batteries, comprising but not limited to one or a combination of more of compounds represented by a chemical formula of LiₓNiₕCo_{y}M_{z}O_{2-d}N_{d} (where 0.95 < x < 1.2, h > 0, y ≥ 0, z ≥ 0, and h + y + z = 1, 0 < d < 1; M is one or a combination of more of Mn and Al; N is one or a combination of more of F, P, and S). The positive electrode active material may further include, but is not limited to, one or a combination of more of LiCoO₂, LiNiO₂, LiVO₂, LiCrO₂, LiMn₂O₄, LiCoMnO₄, Li₂NiMn₃O₈, LiNi_{0.5}Mn_{1.5}O₄, LiCoPO₄, LiMnPO₄, LiFePO₄, LiNiPO₄, LiCoFSO₄, CuS₂, FeS₂, MoS₂, NiS, TiS₂, etc. The positive electrode active material may also be subjected to modification treatment. Methods for modification treatment of the positive electrode active material should be known to those skilled in the art, for example, modification may be performed by a method such as coating or doping. A material used for the modification treatment may include, but is not limited to, one or a combination of more of Al, B, P, Zr, Si, Ti, Ge, Sn, Mg, Ce, W, etc.

In some embodiments of the present disclosure, the negative electrode sheet is the aforementioned electrode sheet. The negative electrode sheet comprises the aforementioned negative electrode current collector comprising the safety coating and the negative electrode active material layer coated on at least one surface of the negative electrode current collector. The negative electrode current collector is not particularly limited and may be a commonly used copper foil in the art. The negative electrode active material layer comprises a negative electrode active material, which comprises a silicon-based material that may be selected from one or more of an elemental silicon, a silicon oxide, a silicon-carbon composite, w silicon alloy, or a mixture of a silicon negative electrode material and other commonly used negative electrode active materials. The other negative electrode active materials include, but are not limited to, one or more of graphite, soft carbon, hard carbon, carbon fibers, mesophase carbon microbeads, tin-based materials, lithium titanate, or other metals capable of forming alloys with lithium. The graphite may be one or more of artificial graphite, natural graphite, and modified graphite; the tin-based material may be one or more of an elemental tin, a tin oxide, and a tin alloy.

In some embodiments of the present disclosure, the separator can be made from various material suitable for the lithium-ion battery separator in the art; for example, it may include, but is not limited to, one or a combination of more of polyethylene, polypropylene, polyvinylidene fluoride, aramid, polyethylene terephthalate, polytetrafluoroethylene, polyacrylonitrile, polyimide, polyamide, polyester, and natural fibers. In practical production, the material and structure of the separator are not strictly limited; for instance, it may be a multilayer structure formed by stacking the above materials, a single-layer structure formed by mixing the above materials, or a single-layer structure of a single material, as long as it fulfill the basic function of a separator.

In some embodiments of the present disclosure, the lithium-ion battery further comprises an electrolytic solution, wherein the electrolytic solution impregnates the positive electrode, negative electrode, and separator. The electrolytic solution comprises an organic solvent, a lithium salt electrolyte, and an additive. The lithium salt electrolyte may be LiPF₆ and/or LiBOB used in a high-temperature electrolytic solution, it may also be at least one of LiBF₄, LiBOB, and LiPF6 used in a low-temperature electrolytic solution; it may also be at least one of LiBF₄, LiBOB, LiPF₆, and LiTFSI used in an overcharge protection electrolytic solution; or it may be at least one of LiClO₄, LiAsF₆, LiCF₃SO₃, and LiN(CF₃SO₂)₂. The organic solvent may be a cyclic carbonate, including propylene carbonate (PC) and ethylene carbonate (EC); it may also be a linear carbonate, including diethyl carbonate (DEC), dimethyl carbonate (DMC), or ethyl methyl carbonate (EMC); or it may be a carboxylate ester, including propylene propyrate (PP), methyl acrylate (MA), ethyl acetate (EA), ethyl propionate (EP) etc. The additive includes, but is not limited to, at least one of a film-forming additive, a conductive additive, a flame-retardant additive, an overcharge protection additive, an additive for controlling contents of H₂O and HF in the electrolytic solution, an additive for improving low-temperature performance, and a water-based safety additive.

The present disclosure also provides a secondary battery, comprising a positive electrode sheet, a negative electrode sheet, and a separator arranged between the positive electrode sheet and the negative electrode sheet; wherein the positive electrode sheet and/or the negative electrode sheet is the aforementioned electrode sheet or the electrode sheet obtained by the aforementioned preparation method. The electrode sheet provided by the present disclosure may be applied not only to the aforementioned lithium-ion battery but also to other secondary batteries, including sodium-ion batteries, potassium-ion batteries, etc., without any limitation herein.

A fifth aspect of the present disclosure provides use of the aforementioned lithium-ion battery in an energy storage device, a power-consuming device, or an electronic device.

### BRIEF DESCRIPTION OF DRAWINGS

The present disclosure is further described below with reference to the accompanying drawings and embodiments, wherein:
FIG. 1 is a schematic structural diagram of a positive electrode sheet comprising a safety coating provided by the present disclosure, wherein: 01-positive electrode sheet; 011-active material layer; 022-current collector; 023-safety coating;
FIG. 2 is a schematic cross-sectional structure diagram of a current collector comprising a safety coating along the unwinding direction provided by the present disclosure, wherein: 02-positive electrode current collector comprising a safety coating; 021-reserved slot; 022-current collector; 023-safety coating; 024-non-safety coating area;
FIG. 3 is a top view of a current collector comprising the safety coating in an uncut unslitted state provided by the present disclosure; and
FIG. 4 is a schematic cross-sectional structure diagram of a current collector comprising a safety coating along the unwinding direction provided by the present disclosure, wherein: 021-reserved slot; 022-current collector; 023-safety coating.

### DETAILED DESCRIPTION

The following description will clearly and completely elucidate the concept of the present disclosure and the resulting technical effects with reference to the embodiments, so as to fully understand the objectives, features, and effects of the disclosure. Obviously, the described embodiments are only a part of the embodiments of the present disclosure, instead of all the embodiments. Based on the embodiments of the present disclosure, all other embodiments obtained by those skilled in the art without creative efforts shall fall within the scope of protection of the present disclosure.

In the description of the present disclosure, references to terms such as "one embodiment", "some embodiments", "illustrative embodiment", "example", "specific example", or "some examples" refer to specific features, structures, materials, or characteristics described in connection with the embodiment or example are included in at least one embodiment or example of the present disclosure. In the present specification, schematic references to the above terms do not necessarily refer to the same embodiment or example. Moreover, the described specific features, structures, materials, or characteristics may be combined in suitable manner in any one or more embodiments or examples.

In the description of the present disclosure, unless otherwise specified, the numerical range "a -b" represents an abbreviated representation of any combination of real numbers between a and b, wherein both a and b are real numbers. Unless otherwise specified, various reaction or operational steps may be performed sequentially or non-sequentially. Preferably, the reaction methods in the present disclosure are performed sequentially.

In the following embodiments, in which specific techniques or conditions are not indicated, the procedures are carried out according to the techniques or conditions described in the literature in the art or according to product instructions. All reagents or instruments for which manufacturers are not indicated are conventional products that are commercially available.

### Example 1

The present example provided a lithium-ion battery, which comprised a positive electrode sheet comprising a safety coating, wherein the safety coating comprised a first binder, a first conductive agent Super P Li, and an inorganic filler boehmite;
wherein the structural formula of the first binder was as follows:

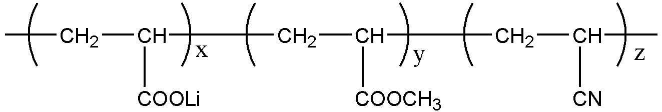

### (1) Preparation of the first binder:

a) Calculated in parts by weight, 1000 parts of distilled water was added to a reaction vessel, stirring was initiated, and high-purity nitrogen gas was introduced to remove oxygen for 1 hour; then 50 parts of acrylonitrile, 35 parts lithium acrylate, and 15 parts of methyl acrylate were added, a resulting mixture was heated to 65 °C under an inert atmosphere and maintained at that temperature.
b) Calculated in parts by weight, 5 parts by weight of an ammonium persulfate solution with a mass concentration of 20% was then added as an initiator to initiate a reaction, and the reaction lasted for 5 hours.
c) After the reaction was completed, a resulting product was subjected to filtering, drying, crushing, and sieving to obtain the binder. For the binder, the -CN group content n₁ was 50%, the -COOLi group content n₂ was 35%, and the - COOCH₃ group content n₃ was 15%; the weight-average molecular weight (Mw) was 3.6×10⁵, the number-average molecular weight (Mn) was 2.0×10⁵, a Mw/Mn ratio was 1.8, and the electrolytic solution absorption rate c was equal to 22.7%.

### (2) Preparation of a positive electrode current collector comprising the safety coating:

By using deionized water as a solvent, calculated in parts by weight, 10 parts of the aforementioned binder were added, dissolving and mixing were performed, and the amount of the deionized water was adjusted until a binder solution with a solid content of 15% and a viscosity of 2.2×10⁴ mPa·s was obtained; then, 88 parts of the inorganic filler boehmite (with Dᵥ₁₀, Dᵥ₅₀, and Dᵥ₉₀ of 0.2 µm, 0.4 µm, and 0.9 µm, respectively, Cᵤ=4.5, C_{c}=0.89, and a specific surface area of 9.5 m²/g) and 2 parts of the first conductive agent Super P Li were uniformly mixed to obtain a safety coating slurry with a solid content of 20% and a viscosity of 750 mPa·s. The safety coating slurry was coated on both side surfaces of an aluminum foil by gravure printing. During coating, L_{A2} and L_{B2} were both set to 0, i.e., L_{A1}=L_{B1}=L_{A}=L_{B}=L, Z=Y=1, and X=4. Additionally, a temperature of the oven during printing was set to 95 °C, and the printing speed was set to 30 m/min. Finally, a positive electrode current collector with a double-sided safety coating was obtained. The double-sided areal density of the safety coating was 10.3 mg/1540.25 mm², the double-sided thickness was 5.3 µm, the double-sided film resistance was 3.1 Ω @0.4T, and the adhesion between the safety coating and the current collector was 1356 N/m.

### (3) Preparation of a positive electrode sheet:

A positive electrode active material, a conductive agent (a mixture of conductive carbon black and carbon nanotubes in a mass ratio of 6:5), a PVDF binder, and NMP were uniformly mixed according to a mass ratio of 97.6:1.1:1.3:35 to produce a positive electrode slurry with a solid content of 75% and a viscosity of 7000 mPa·s. The positive electrode slurry was coated on one side of the aforementioned aluminum foil current collector comprising the safety coating, dried at 85 °C and winded. Then, the other side of the aluminum foil current collector comprising the safety coating was coated with the positive electrode slurry and dried using the same method, followed by cold pressing. Subsequently, edges were trimmed, and the sheet was cut to obtain the positive electrode sheet of lithium-ion battery (film resistance: 0.8 Ω @0.4T).

### (4) Preparation of the negative electrode sheet:

By using water as a solvent, graphite, a thickening agent, and a SBR binder were uniformly mixed according to a mass ratio of 97.7:1.1:1.2 to produce an negative electrode slurry for lithium-ion battery with a solid content of 50% and a viscosity of 5000 mPa·s. The negative electrode slurry was coated on one side surface of a copper foil current collector, dried at 80 °C and winded. The other side of the copper foil was then coated with the negative electrode slurry and dried using the same method, to obtain a negative electrode sheet coated with an active material on both sides.

### (5) Preparation of electrolytic solution:

Lithium hexafluorophosphate (LiPF₆) was dissolved in a mixed solvent of dimethyl carbonate (DMC), ethylene carbonate (EC), and ethyl methyl carbonate (EMC) with a mass ratio of 3:5:2 to obtain the electrolytic solution.

### (6) Assembly of battery:

The prepared positive electrode sheet, negative electrode sheet, and a separator were wound to form a battery cell with a capacity of approximately 5 Ah. The separator was arranged between the adjacent positive electrode and negative electrode sheet. The positive electrode was connected by spot-welding an aluminum tab, and the negative electrode was connected by spot-welding a nickel tab. The battery cell was then placed in an aluminum-plastic pouch, baked, and introduced with the aforementioned electrolytic solution. After being subjected to sealing, formation, and capacity grading processes, the lithium-ion battery was finally obtained.

### Example 2

The differences between Example 1 and Example 2 were that: in Example 2, calculated in parts by weight, 96.94 parts of the inorganic filler boehmite (with Dᵥ₁₀, Dᵥ₅₀, and Dᵥ₉₀ of 0.2 µm, 0.4 µm, and 0.9 µm, respectively, Cᵤ=4.5, C_{c}=0.89), 1.06 parts of the first binder (a mass fraction w of the first binder in the safety coating satisfied w = k×(Cᵤ)^{0.5}/Dᵥ₅₀, k = 0.2), and 2 parts of the first conductive agent Super P Li were used.

The others were identical to those described in Example 1 and were not reiterated here.

### Example 3

The differences between Example 1 and Example 3 were that: in Example 3, calculated in parts by weight, 87.39 parts of the inorganic filler boehmite (with Dᵥ₁₀, Dᵥ₅₀, and Dᵥ₉₀ of 0.2 µm, 0.4 µm, and 0.9 µm, respectively, Cᵤ=4.5, C_{c}=0.89), 10.61 parts of the first binder (a mass fraction w of the first binder in the safety coating satisfied w = k×(Cᵤ)^{0.5}/Dᵥ₅₀, k = 2), and 2 parts of the first conductive agent Super P Li were used.

The others were identical to those described in Example 1 and were not reiterated here.

### Example 4

The differences between Example 1 and Example 4 were that: in Example 4, calculated in parts by weight, 76.79 parts of the inorganic filler boehmite (with Dᵥ₁₀, Dᵥ₅₀, and Dᵥ₉₀ of 0.1 µm, 0.4 µm, and 1.8 µm, respectively, Cᵤ=18, C_{c}=0.89), 21.21 parts of the first binder (a mass fraction w of the first binder in the safety coating satisfied w = k×(Cᵤ)^{0.5}/Dᵥ₅₀, k = 2), and 2 parts of the first conductive agent Super P Li were used.

The others were identical to those described in Example 1 and were not reiterated here.

### Example 5

The differences between Example 1 and Example 5 were that: in Example 5, calculated in parts by weight, 77.95 parts of the inorganic filler boehmite (with Dᵥ₁₀, Dᵥ₅₀, and Dᵥ₉₀ of 0.1 µm, 0.4 µm, and 1.8 µm, respectively, Cᵤ=18, C_{c}=0.89), 20.05 parts of the first binder (a mass fraction w of the first binder in the safety coating satisfied w = k×(Cᵤ)^{0.5}/Dᵥ₅₀, k = 1.89), and 2 parts of the first conductive agent Super P Li were used.

The others were identical to those described in Example 1 and were not reiterated here.

### Example 6

The differences between Example 1 and Example 6 were that: in Example 6, calculated in parts by weight, 84.64 parts of the inorganic filler boehmite (with Dᵥ₁₀, Dᵥ₅₀, and Dᵥ₉₀ of 0.15 µm, 0.4 µm, and 1.2 µm, respectively, Cᵤ=8, C_{c}=0.89), 13.36 parts of the first binder (a mass fraction w of the first binder in the safety coating satisfied w = k×(Cᵤ)^{0.5}/Dᵥ₅₀, k = 1.89), and 2 parts of the first conductive agent Super P Li were used.

The others were identical to those described in Example 1 and were not reiterated here.

### Example 7

The differences between Example 1 and Example 7 were that: in Example 7, calculated in parts by weight, 91.32 parts of the inorganic filler boehmite (with Dᵥ₁₀, Dᵥ₅₀, and Dᵥ₉₀ of 0.3 µm, 0.4 µm, and 0.6 µm, respectively, Cᵤ=2, C_{c}=0.89), 6.68 parts of the first binder (a mass fraction w of the first binder in the safety coating satisfied w = k×(Cᵤ)^{0.5}/Dᵥ₅₀, k = 1.89), and 2 parts of the first conductive agent Super P Li were used.

The others were identical to those described in Example 1 and were not reiterated here.

### Example 8

The differences between Example 1 and Example 8 were that: in Example 8, calculated in parts by weight, 84.64 parts of the inorganic filler boehmite (with Dᵥ₁₀, Dᵥ₅₀, and Dᵥ₉₀ of 0.2 µm, 0.3 µm, and 0.9 µm, respectively, Cᵤ=4.5, C_{c}=0.5), 13.36 parts of the first binder (a mass fraction w of the first binder in the safety coating satisfied w = k×(Cᵤ)^{0.5}/Dᵥ₅₀, k = 1.89), and 2 parts of the first conductive agent Super P Li were used.

The others were identical to those described in Example 1 and were not reiterated here.

### Example 9

The differences between Example 1 and Example 9 were that: in Example 9, calculated in parts by weight, 91.32 parts of the inorganic filler boehmite (with Dᵥ₁₀, Dᵥ₅₀, and Dᵥ₉₀ of 0.2 µm, 0.6 µm, and 0.9 µm, respectively, Cᵤ=4.5, C_{c}=2), 6.68 parts of the first binder (a mass fraction w of the first binder in the safety coating satisfied w = k×(Cᵤ)^{0.5}/Dᵥ₅₀, k = 1.89), and 2 parts of the first conductive agent Super P Li were used.

The others were identical to those described in Example 1 and were not reiterated here.

### Example 10

The differences between Example 1 and Example 10 were that: in Example 10, calculated in parts by weight, 92.58 parts of the inorganic filler boehmite (with Dᵥ₁₀, Dᵥ₅₀, and Dᵥ₉₀ of 0.2 µm, 0.74 µm, and 0.9 µm, respectively, Cᵤ=4.5, C_{c}=3.04), 5.42 parts of the first binder (a mass fraction w of the first binder in the safety coating satisfied w = k×(Cᵤ)^{0.5}/Dᵥ₅₀, k = 1.89), and 2 parts of the first conductive agent Super P Li were used.

The others were identical to those described in Example 1 and were not reiterated here.

### Example 11

The differences between Example 1 and Example 11 were that: in Example 11,calculated in parts by weight, 77.95 parts of the inorganic filler boehmite (with Dᵥ₁₀, Dᵥ₅₀, and Dᵥ₉₀ of 0.1 µm, 0.2 µm, and 0.45 µm, respectively, Cᵤ=4.5, C_{c}=0.89), 20.05 parts of the first binder (a mass fraction w of the first binder in the safety coating satisfied w = k×(Cᵤ)^{0.5}/Dᵥ₅₀, k = 1.89), and 2 parts of the first conductive agent Super P Li were used.

The others were identical to those described in Example 1 and were not reiterated here.

### Example 12

The differences between Example 1 and Example 12 were that: in Example 12, calculated in parts by weight, 97 parts of the inorganic filler boehmite (with Dᵥ₁₀, Dᵥ₅₀, and Dᵥ₉₀ of 2 µm, 4 µm, and 9 µm, respectively, Cᵤ=4.5, C_{c}=0.89), 1 part of the first binder (a mass fraction w of the first binder in the safety coating satisfied w = k×(Cᵤ)^{0.5}/Dᵥ₅₀, k = 1.89), and 2 parts of the first conductive agent Super P Li were used.

The others were identical to those described in Example 1 and were not reiterated here.

### Example 13

The differences between Example 1 and Example 13 were that: in Example 13, the first binder was replaced with a PVDF binder, and the solvent was changed from deionized water to N-Methylpyrrolidone (NMP).

The others were identical to those described in Example 1 and were not reiterated here.

### Example 14

The differences between Example 1 and Example 14 were that: in Example 14, a separate ceramic layer was coated to the non-water-based safety coating area on Side B during coating, i.e., L_{B2} ≠ 0. As shown in FIG. 3, the total length of the current collector comprising the water-based safety coating is L; on Side B, the length of the water-based safety coating area is L_{B1}, and the length of the non-water-based safety coating area is L_{B2}, with L_{B1}>L_{B2}, and L_{B1}+L_{B2}=L_{B}=L_{A1}=L_{A}=L.

The others were identical to those described in Example 1 and were not reiterated here.

### Comparative Example 1

The differences between Example 1 and Comparative Example 1 were that: in Comparative Example 1, calculated in parts by weight, 72.94 parts of the inorganic filler boehmite (with Dᵥ₁₀, Dᵥ₅₀, and Dᵥ₉₀ of 0.08 µm, 0.4 µm, and 2.25 µm, respectively, Cᵤ=28.1, C_{c}=0.89), 25.06 parts of the first binder (a mass fraction w of the first binder in the safety coating satisfied w = k×(Cᵤ)^{0.5}/Dᵥ₅₀, k = 1.89), and 2 parts of the first conductive agent Super P Li were used.

The others were identical to those described in Example 1 and were not reiterated here.

### Comparative Example 2

The differences between Example 1 and Comparative Example 2 were that: in Comparative Example 2, calculated in parts by weight, 92.24 parts of the inorganic filler boehmite (with Dᵥ₁₉, Dᵥ₅₀, and Dᵥ₉₀ of 0.35 µm, 0.4 µm, and 0.52 µm, respectively, Cᵤ=1.5, C_{c}=0.88), 5.76 parts of the first binder (a mass fraction w of the first binder in the safety coating satisfied w = k×(Cᵤ)^{0.5}/Dᵥ₅₀, k = 1.89), and 2 parts of the first conductive agent Super P Li were used.

The others were identical to those described in Example 1 and were not reiterated here.

### Comparative Example 3

The differences between Example 1 and Comparative Example 3 were that: in Comparative Example 3, calculated in parts by weight, 83.15 parts of the inorganic filler boehmite (with Dᵥ₁₀, Dᵥ₅₀, and Dᵥ₉₀ of 0.2 µm, 0.27 µm, and 0.9 µm, respectively, Cᵤ=4.5, C_{c}=0.41), 14.85 parts of the first binder (a mass fraction w of the first binder in the safety coating satisfied w = k×(Cᵤ)^{0.5}/Dᵥ₅₀, k = 1.89), and 2 parts of the first conductive agent Super P Li were used.

The others were identical to those described in Example 1 and were not reiterated here.

### Comparative Example 4

The differences between Example 1 and Comparative Example 4 were that: in Comparative Example 4, calculated in parts by weight, 93 parts of the inorganic filler boehmite (with Dᵥ₁₀, Dᵥ₅₀, and Dᵥ₉₀ of 0.2 µm, 0.8 µm, and 0.9 µm, respectively, Cᵤ=4.5, C_{c}=3.56), 5 parts of the first binder (a mass fraction w of the first binder in the safety coating satisfied w = k×(Cᵤ)^{0.5}/Dᵥ₅₀, k = 1.89), and 2 parts of the first conductive agent Super P Li were used.

The others were identical to those described in Example 1 and were not reiterated here.

### Comparative Example 5

The differences between Example 1 and Comparative Example 5 were that: in Comparative Example 5, calculated in parts by weight, 85.47 parts of the inorganic filler boehmite (with Dᵥ₁₀, Dᵥ₅₀, and Dᵥ₉₀ of 0.08 µm, 0.8 µm, and 2.25 µm, respectively, Cᵤ=28.1, C_{c}=3.56), 12.53 parts of the first binder (a mass fraction w of the first binder in the safety coating satisfied w = k×(Cᵤ)^{0.5}/Dᵥ₅₀, k = 1.89), and 2 parts of the first conductive agent Super P Li were used.

The others were identical to those described in Example 1 and were not reiterated here.

### Comparative Example 6

The differences between Example 1 and Comparative Example 6 were that: in Comparative Example 6, calculated in parts by weight, 97.47 parts of the inorganic filler boehmite (with Dᵥ₁₉, Dᵥ₅₀, and Dᵥ₉₀ of 0.2 µm, 0.4 µm, and 0.9 µm, respectively, Cᵤ=4.5, C_{c}=0.89), 0.53 parts of the first binder (a mass fraction w of the first binder in the safety coating satisfied w = k×(Cᵤ)^{0.5}/Dᵥ₅₀, k = 0.1), and 2 parts of the first conductive agent Super P Li were used.

The others were identical to those described in Example 1 and were not reiterated here.

### Comparative Example 7

The differences between Example 1 and Comparative Example 7 were that: in Comparative Example 7, calculated in parts by weight, 74.14 parts of the inorganic filler boehmite (with Dᵥ₁₉, Dᵥ₅₀, and Dᵥ₉₀ of 0.2 µm, 0.4 µm, and 0.9 µm, respectively, Cᵤ=4.5, C_{c}=0.89), 23.86 parts of the first binder (a mass fraction w of the first binder in the safety coating satisfied w = k×(Cᵤ)^{0.5}/Dᵥ₅₀, k = 4.5), and 2 parts of the first conductive agent Super P Li were used.

The others were identical to those described in Example 1 and were not reiterated here.

### Comparative Example 8

The differences between Example 1 and Comparative Example 8 were that: in Comparative Example 8, the surface of the positive electrode current collector was not coated with the safety coating.

The others were identical to those described in Example 1 and were not reiterated here.

### Test examples

To verify the impact of introducing the safety coating of the present disclosure on the performance of battery cell, tests were conducted on the particle size of the inorganic filler, the electrolytic solution absorption rate c of the binder, the double-sided film resistance of the safety coating, as well as nail penetration, low-temperature discharge performance, rate performance, and cycling performance of the battery cell.

Method for testing particle size: dispersing the inorganic filler in water which was used as a dispersing agent, and measuring the particle size of the inorganic filler by using a laser particle size analyzer (Malvern, Mastersizer 3000).

Method for testing electrolytic solution absorption rate c: pouring a binder solution into a polytetrafluoroethylene dish and then baking to evaporate deionized water, so as to form a binder polymer film with a thickness controlled at 100 µm; cutting the film into pieces, to obtain film sheets with a length of 50 mm and a width of 50 mm; after vacuum drying the film sheets for 24 hours, weighing the dried film sheets; immersing the dried film sheets in an electrolytic solution at 80 °C for 12 hours and then taking the film sheets out of the electrolytic solution, wiping off the electrolytic solution adhering to the surfaces of film sheets, and weighing the film sheets again to obtain the weight of the film sheets after absorbing the electrolytic solution; and a percentage increase in weight (%) of the film sheets after being immersed in the electrolytic solution is the electrolytic solution absorption rate of the binder at 80 °C.

Method for testing film resistance: testing the film resistance by using the ACCFILM film resistance testing system (Model TT-ACCF-G2A) from Hangzhou Chuanyuan Technology Co., Ltd, China, wherein the pressure for testing was 0.4 t, and the pressure holding time was 10 s.

Method for testing nail penetration: charging a battery cell at room temperature at a constant current of 1.0 C to 4.45 V, with a cutoff rate of 0.05 C; then, conducting the nail penetration test on the fully charged battery cell, during the test, the battery cell was placed with its deep groove facing upward, and completely penetrated by using a steel nail with a diameter of 4.0 mm at a speed of 40 mm/s, and the locations for nail penetration were the left, middle, and right positions of the largest surface of the battery cell (5 battery cells were tested at each location); and maintaining the penetration for 1 hour, and if no fire or explosion of the battery cell occurred, the test was considered passed.

Method for testing low-temperature discharge performance: discharging a battery cell at a constant current of 1 C to 3 V, and settling for 5 minutes; setting the temperature chamber to 25 °C, and placing the battery cell in the temperature chamber and settling for 60 minutes; charging the battery cell at a constant current of 1.0 C to 4.45 V, with a cutoff rate of 0.02 C, and settling for 5 minutes; discharging the battery cell at a constant current of 0.2 C to 3 V, and recording the capacity at this point as the initial capacity C₀; setting the temperature chamber to 25 °C, and settling the battery cell for 60 minutes; charging the battery cell at a constant current of 1.0 C to 4.45 V, with a cutoff rate of 0.02 C, and settling for 5 minutes; setting the temperature chamber to -10 °C and settling the battery cell for 120 minutes; and discharging the battery cell at 0.2 C to 3.0 V, recording the capacities discharged to 3.4 V and 3.0 V as C₁ and C₂, respectively, and wherein the ratio of C₁ to C₀ represented the capacity retention rate at -10 °C when discharged to 3.4 V.

Method for testing rate discharge performance: discharging a battery cell at a constant current of 1 C to 3 V, and settling for 5 minutes; charging the battery cell at a constant current of 1.0 C to 4.45 V, with a cutoff rate of 0.02 C, and settling for 5 minutes; discharging the battery cell at a constant current of 0.2 C to 3 V, recording the capacity at this point as the initial capacity C₃; charging the battery cell at a constant current of 1.0 C to 4.45 V, with a cutoff rate of 0.02 C, and settling for 5 minutes; and discharging the battery cell at 0.2 C to 3.0 V, recording the capacities discharged to 3.4 V and 3.0 V as C₄ and C₅, respectively, and wherein the ratio of C₄ to C₃ represented the capacity retention rate when discharged to 3.4 V at 2 C.

Method for testing cycling performance: under ambient temperature of 25±2°C, discharging a battery cell at a constant current of 0.2 C to 3.0 V, then charging at a constant current of 3 C to 4.45 V, with a cutoff rate of 0.05 C; and recording the voltage, internal resistance, capacity, and thickness (measured with 600 g PPG) of the fully charged battery cell at the first time. The cycling process followed the HFC protocol as follows: discharging at a constant current of 0.2 C to 3 V; charging at a constant current of 3.0 C to 4.25 V; charging at a constant current of 2.5 C to 4.25 V; charging at a constant current of 2.0 C to 4.45 V; charging at a constant current of 1.4 C to 4.50 V, with a cutoff rate of 0.3 C; charging at a constant current of 2 A to 4.45 V, with a cutoff rate of 0.05 C; and discharging at a constant current of 1.0 C to 3 V. One cycle was recorded by completing the above steps. After 49 cycles, a low-current recovery protocol was conducted as followed: charging at a constant current of 3.0 C to 4.25 V; charging at a constant current of 2.5 C to 4.25 V; charging at a constant current of 2.0 C to 4.45 V; charging at a constant current of 1.4 C to 4.50 V, with a cutoff rate of 0.3 C; charging at a constant current of 2 A to 4.45 V, with a cutoff rate of 0.05 C; discharging at a constant current of 0.2 C to 3 V; charging at a constant current of 3.0 C to 4.45 V, with a cutoff rate of 0.05 C. Every 100 cycles, the voltage, internal resistance, and thickness (measured with 600 g PPG) of the fully charged battery cell were recorded.

The parameter and the test results for Examples 1-14 and Comparative Examples 1-8 were shown in Table 1 as below.

**Table 1**

| | Dᵥ₁₀ | Dᵥ₅₀ | Dᵥ₉₀ | Cᵤ | C_{c} | k | w | c | Nail penetrat ion | Low-temper ature perfor mance( 3.4V@ -10°C) | Rate performanc e (3.4V@2.0 C) | Cycling performanc e (RT@800 cycles) |
|---|---|---|---|---|---|---|---|---|---|---|---|---|
| Example 1 | 0.2 | 0.4 | 0.9 | 4.5 | 0.89 | 1.8 9 | 10.0 0 | 23 % | 15/15 | 73.1 % | 75.5% | 90.1% |
| Example 2 | 0.2 | 0.4 | 0.9 | 4.5 | 0.89 | 0.2 0 | 1.06 | 23 % | 15/15 | 70.2 % | 71.3% | 88.1% |
| Example 3 | 0.2 | 0.4 | 0.9 | 4.5 | 0.89 | 2.0 0 | 10.6 1 | 23 % | 15/15 | 73.5 % | 75.8% | 90.5% |
| Example 4 | 0.1 | 0.4 | 1.8 | 18 | 0.89 | 2.0 0 | 21.2 1 | 23 % | 15/15 | 71.2 % | 72.1% | 89.1% |
| Example 5 | 0.1 | 0.4 | 1.8 | 18 | 0.89 | 1.8 9 | 20.0 5 | 23 % | 15/15 | 73.5 % | 74.9% | 89.5% |
| Example 6 | 0.15 | 0.4 | 1.2 | 8 | 0.89 | 1.8 9 | 13.3 6 | 23 % | 15/15 | 74.8 % | 76.0% | 90.8% |
| Example 7 | 0.3 | 0.4 | 0.6 | 2 | 0.89 | 1.8 9 | 6.68 | 23 % | 15/15 | 73.0 % | 74.7% | 89.8% |
| Example 8 | 0.2 | 0.3 | 0.9 | 4.5 | 0.50 | 1.8 9 | 13.3 6 | 23 % | 15/15 | 73.9 % | 75.8% | 90.3% |
| Example 9 | 0.2 | 0.6 | 0.9 | 4.5 | 2.00 | 1.8 9 | 6.68 | 23% | 15/15 | 72.9% | 74.3% | 89.7% |
| Example 10 | 0.2 | 0.74 | 0.9 | 4.5 | 3.04 | 1.8 9 | 5.42 | 23 % | 15/15 | 72.6 % | 74.9% | 89.6% |
| Example 11 | 0.1 | 0.2 | 0.45 | 4.5 | 0.89 | 1.8 9 | 20.0 5 | 23 % | 15/15 | 71.7 % | 72.6% | 89.5% |
| Example 12 | 2 | 4 | 9 | 4.5 | 0.89 | 1.8 9 | 1.00 | 23 % | 15/15 | 70.5 % | 71.8% | 88.5% |
| Example 13 | 0.2 | 0.4 | 0.9 | 4.5 | 0.89 | 1.8 9 | 10.0 2 | / | 15/15 | 73.0 % | 74.5% | 90.3% |
| Example 14 | 0.2 | 0.4 | 0.9 | 4.5 | 0.89 | 1.8 9 | 10.0 2 | 23 % | 15/15 | 72.9 % | 74.2% | 90.5% |
| Compar ative Example 1 | 0.08 | 0.4 | 2.25 | 28.1 | 0.89 | 1.8 9 | 25.0 6 | 23 % | 12/15 | 70.5 % | 70.9% | 88.3% |
| Compar ative Example 2 | 0.35 | 0.4 | 0.52 | 1.5 | 0.88 | 1.8 9 | 5.76 | 23 % | 11/15 | 72.9 % | 74.1% | 89.9% |
| Compar ative Example 3 | 0.2 | 0.27 | 0.9 | 4.5 | 0.41 | 1.8 9 | 14.8 5 | 23 % | 9/15 | 73.6 % | 75.9% | 90.5% |
| Compar ative Example 4 | 0.2 | 0.8 | 0.9 | 4.5 | 3.56 | 1.8 9 | 5.01 | 23 % | 8/15 | 72.3 % | 74.7% | 89.5% |
| Compar ative Example 5 | 0.08 | 0.8 | 2.25 | 28.1 | 3.56 | 1.8 9 | 12.5 3 | 23 % | 6/15 | 72.5 % | 74.6% | 89.7% |
| Compar ative Example 6 | 0.2 | 0.4 | 0.9 | 4.5 | 0.89 | 0.1 0 | 0.53 | 23 % | 5/15 | 66.5 % | 68.2% | 85.8% |
| Compar ative Example 7 | 0.2 | 0.4 | 0.9 | 4.5 | 0.89 | 4.5 0 | 23.8 6 | 23 % | 15/15 | 67.6 % | 69.1% | 86.5% |
| Compar ative Example 8 | / | / | / | / | / | / | / | / | 0/15 | 69.0 % | 69.6% | 86.3% |

By comparing the test results from the above table, it can be seen that compared to Comparative Examples 1-8, the particle sizes Dᵥ₁₀, Dᵥ₅₀, and Dᵥ₉₀ of the inorganic filler in the safety coating of Examples 1-14 satisfies 2 ≤ Cu=Dᵥ₉₀/Dᵥ₁₀ ≤ 18, and 0.5≤ C_{c}=(Dᵥ₅₀×Dᵥ₅₀)/(Dᵥ₁₀×Dᵥ₉₀) ≤3.1, and the binder content w satisfies: w=k×(Cᵤ)^{0.5}/Dᵥ₅₀, with 0.2≤k≤2, where k is a constant related to the density of the inorganic filler. The obtained battery cells shows significantly improved safety performance, with pass rate of the nail penetration test increasing from 0% to 100%; meanwhile, the low-temperature discharge performance, rate discharge performance, and cycling performance are significantly enhanced.

In summary, by limiting the particle size of the inorganic filler and selecting the binder, the safety coating provided by the present disclosure is capable of improving the safety performance of the battery cell while enhancing its rate performance, low-temperature discharge performance, and cycling performance. Wherein, the particle sizes Dᵥ₁₀, Dᵥ₅₀, and Dᵥ₉₀ of the inorganic filler shall satisfy: 2≤Cᵤ=Dᵥ₉₀/Dᵥ₁₀≤18, 0.5≤C_{c}=Dᵥ₅₀×Dᵥ₅₀/(D_{y10}×Dᵥ₉₀) ≤3.1, Cᵤ and C_{c} represents the coefficient of nonuniformity and curvature coefficient of the inorganic filler, respectively; Dᵥ₁₀, Dᵥ₅₀, and Dᵥ₉₀ represents particle sizes corresponding to volume distribution cumulative values of the inorganic filler reaching 10%, 50%, and 90%, respectively. When the particle size of the inorganic filler satisfies the above relationship, the gradation curve exhibits good continuity, fine and coarse particles are well graded, enabling the safety coating to have a relatively dense structure, thereby reducing the probability of short circuits between the positive electrode and the negative electrode, and enhancing the safety performance of the battery cell. The mass fraction w of the first binder should satisfy w=k×(Cᵤ)^{0.5}/Dᵥ₅₀, where 0.2<k<2. When k falls within this range, the binder not only provides sufficient adhesion and minimized polarization of the battery cell, but also promotes the electrolytic solution absorption by the safety coating, thereby improving the rate performance, low-temperature discharge performance, and cycling performance of the battery cell. Ultimately, the safety coating provided by the present disclosure achieves a well-graded distribution of large and small particles by limiting the particle size of the inorganic filler, resulting in a relatively dense structure for the safety coating. This reduces the probability of contact between the positive electrode and the negative electrode, thereby enhancing the safety performance of the battery cell. Meanwhile, by optimizing the content of binder in the safety coating, the electrolytic solution absorption by the safety coating is promoted, which improves the rate performance, low-temperature discharge performance, and cycling performance of the battery cell. The battery cell provided by the present disclosure, when satisfies the above relationship, can achieve a 100% pass rate in nail penetration test, while also exhibiting a capacity retention rate of no less than 88% after 800 cycles at 25 °C, a discharge capacity of no less than 70% @3.4V at -10 °C, and a discharge capacity of no less than 70% @3.4V at 2.0C.

The embodiments described above merely represent several embodiments of the present disclosure with a relatively specific and detailed description, however, it should not be construed as limiting the scope of the present disclosure. It should be noted that those of ordinary skill in the art may make various modifications and improvements without departing from the concept of the present disclosure, and all such modifications and improvements fall within the protection scope of the present disclosure.

## Claims

1. A safety coating, wherein raw materials of the safety coating comprise an inorganic filler and a first binder;
a coefficient of nonuniformity Cᵤ of the inorganic filler satisfies 2 ≤ Cᵤ ≤ 18, a curvature coefficient C_{c} of the inorganic filler satisfies 0.5 ≤ C_{c} ≤ 3.1;
a mass fraction w of the first binder in the safety coating satisfies w = k×(Cᵤ)^{0.5}/Dᵥ₅₀, where0.2 ≤ k < 2, and k is a constant;
a formula for calculating the coefficient of nonuniformity Cᵤ is as follows: Cᵤ = Dᵥ₉₀/Dᵥ₁₀, and a formula for calculating the curvature coefficient C_{c} is as follows: C_{c} = Dᵥ₅₀×Dᵥ₅₀/(Dᵥ₁₀×Dᵥ₉₀); and
Dᵥ₁₀, Dᵥ₅₀, and Dᵥ₉₀ refer to particle sizes corresponding to volume distribution cumulative values of the inorganic filler reaching 10%, 50%, and 90%, respectively.

2. The safety coating according to claim 1, wherein a median particle size Dᵥ₅₀ of the inorganic filler ranges from 0.2 µm to 4 µm, and a specific surface area is 5-50 m²/g; and/or
the inorganic filler comprises one or more of aluminum oxide, boehmite, aluminum hydroxide, magnesium hydroxide, silicon dioxide, titanium dioxide, lithium iron phosphate, lithium manganese iron phosphate, lithium aluminum titanium phosphate, lithium lanthanum titanate, or lithium lanthanum zirconium oxide; and/or
a mass fraction of the inorganic filler in the safety coating is 73.8% to 98.5%.

3. The safety coating according to claim 1, wherein the first binder comprises one or more of a polyvinylidene fluoride binder, a sodium carboxymethyl cellulose binder, or a polyacrylate-based binder; and/or
a mass fraction of the first binder in the safety coating is 1 wt% to 21.2 wt%.

4. The safety coating according to claim 3, wherein the first binder is a polyacrylate-based binder, and a structural formula of the polyacrylate-based binder is as follows: 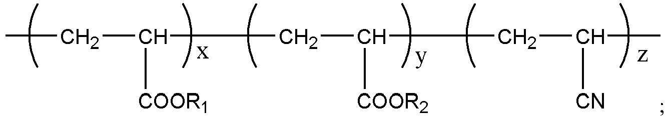
wherein, R₁ is independently H, Li, or Na at each occurrence;
R₂ is independently substituted or unsubstituted C₁-C₁₀ alkyl at each occurrence;
5 ≤ (x+z)/y ≤ 20, 1.2 ≤ z/x ≤ 2, where x, y, and z are all non-zero; and/or
a weight-average molecular weight M_{w} of the polyacrylate-based binder ranges from 200,000 to 500,000, a number-average molecular weight Mₙ of the polyacrylate-based binder ranges from 100,000 to 400,000; and/or
a ratio of the weight-average molecular weight M_{w} to the number-average molecular weight Mₙ of the polyacrylate-based binder is M_{w}/Mₙ≤3; and/or
an electrolytic solution absorption rate c of the polyacrylate-based binder at 80 °C is 10% to 50%.

5. The safety coating according to any one of claims 1-4, wherein the raw materials of the safety coating further comprise a first conductive agent, and the safety coating satisfies at least one of the following:
A1) a mass fraction of the first conductive agent in the safety coating is 0.5% to 5%;
A2) a mass ratio of the first conductive agent, the first binder, and the inorganic filler is 0.5-5: 1-21.2: 73.8-98.5;
A3) the raw materials of the safety coating further comprise a thermally stable active material;
A4) when A3) is included, a mass ratio of the first conductive agent, the first binder, the inorganic filler, and the thermally stable active material is 0.5-5: 1-21.2: 1-97.5: 1-97.5; and
A5) when A3) is included, the thermally stable active material comprises one or both of lithium iron phosphate and lithium manganese iron phosphate.

6. An electrode sheet, comprising:
a current collector;
an active material layer; and
the safety coating according to any one of claims 1-5.

7. The electrode sheet according to claim 6, wherein the safety coating is coated on at least one side surface of the current collector, and the active material layer is coated on one side surface of the safety coating facing away from the current collector and/or on one side surface of the current collector facing away from the safety coating; or
the active material layer is coated on at least one side surface of the current collector, and the safety coating is coated on one side surface of the active material layer facing away from the current collector and/or on one side surface of the current collector facing away from the active material layer.

8. The electrode sheet according to claim 7, wherein the safety coating is coated on both side surfaces of the current collector, and the safety coating satisfies at least one of the following conditions:
B1) a double-sided thickness of the safety coating is 1 µm to 20 µm;
B2) a double-sided coating areal density of the safety coating is 2 mg/1540.25 mm² to 35 mg/1540.25 mm²;
B3) a double-sided film resistance of the safety coating tested under a pressure of 0.4 t is 0.5 Ωto 5 Ω;
B4) numerical values of the double-sided thickness d and the double-sided film resistance R under a pressure of 0.4 t of the safety coating satisfy: 2≤R×d≤50; and
B5) along a direction perpendicular to an unwinding direction of the current collector, a distance W_{A1} between a left edge of the safety coating on Side A of the current collector and a left edge of the current collector ranges from 2 mm to 30 mm, and a distance W_{A2} between a right edge of the safety coating on Side A of the current collector and a right edge of the current collector ranges from 3 mm to 30 mm; a distance W_{B1} between a left edge of the safety coating on Side B of the current collector and a left edge of the current collector ranges from 2 mm to 30 mm, and a distance W_{B2} between a right edge of the safety coating on Side B of the current collector and a right edge of the current collector ranges from 3 mm to 30 mm; where W_{B1}-W_{A1}≥1 mm and W_{B2}-W_{A2}≥1 mm.

9. A method for preparing the electrode sheet according to any one of claims 6-8, comprising the steps of:
mixing a first binder with water and performing dissolving and mixing to obtain a binder solution;
uniformly mixing a first conductive agent and an inorganic filler with the binder solution, or uniformly mixing a first conductive agent, a thermally stable active material, and an inorganic filler with the binder solution, to obtain a safety coating slurry; and
coating the safety coating slurry on one side surface or both side surfaces of a current collector, or on one side surface of an active material layer facing away from the current collector, to obtain the electrode sheet.

10. The method for preparing the electrode sheet according to claim 9, comprising at least one of the following:
C1) a mass ratio of the first conductive agent, the first binder, and the inorganic filler is 0.5-5: 1-21.2: 73.8-98.5;
C2) a solid content of the binder solution is 10% to 30%;
C3) a viscosity of the binder solution is 1×10³ mPa·s to 3×10⁴ mPa·s;
C4) a solid content of the safety coating slurry is ≥10%;
C5) a viscosity of the safety coating slurry is ≥50 mPa·s;
C6) a dyne value of the current collector is ≥30 dyn/cm;
C7) the safety coating slurry is coated on one side surface or both side surfaces of the current collector, or on one side surface of the active material layer facing away from the current collector by gravure printing;
C8) when C7) is included, an temperature of an oven during the gravure printing is 90-110 °C, and a printing speed is 10-50 m/min; and
C9) a mass ratio of the first conductive agent, the first binder, the inorganic filler, and the thermally stable active material is 0.5-5: 1-21.2: 1-97.5: 1-97.5.

11. A lithium-ion battery, comprising a positive electrode sheet, a negative electrode sheet, and a separator arranged between the positive electrode sheet and the negative electrode sheet; wherein the positive electrode sheet and/or the negative electrode sheet is the electrode sheet according to any one of claims 6-8, or the electrode sheet prepared by the method according to any one of claims 9-10.

12. Use of the lithium-ion battery according to claim 11 in an energy storage device, a power-consuming device, or an electronic device.
